(19) Europäisches Patentamt
European Patent Office
Office européen des brevets

(11) **EP 2 710 429 B1**

(12) **EUROPÄISCHE PATENTSCHRIFT**

(45) Veröffentlichungstag und Bekanntmachung des Hinweises auf die Patenterteilung:
**08.04.2020 Patentblatt 2020/15**

(21) Anmeldenummer: **12719751.5**

(22) Anmeldetag: **10.05.2012**

(51) Int Cl.:
*G03B 21/14* *(2006.01)*     *G03B 21/00* *(2006.01)*
*G02B 27/18* *(2006.01)*     *H04N 9/31* *(2006.01)*

(86) Internationale Anmeldenummer:
**PCT/EP2012/058669**

(87) Internationale Veröffentlichungsnummer:
**WO 2012/156280 (22.11.2012 Gazette 2012/47)**

(54) **PROJEKTIONSDISPLAY UND VERFAHREN ZUM ANZEIGEN EINES GESAMTBILDS FÜR PROJEKTIONSFREIFORMFLÄCHEN ODER VERKIPPTE PROJEKTIONSFLÄCHEN**

PROJECTION DISPLAY AND METHOD FOR DISPLAYING A TOTAL IMAGE FOR PROJECTION FREEFORM SURFACES OR TILTED PROJECTION SURFACES

DISPOSITIF D'AFFICHAGE PAR PROJECTION ET PROCÉDÉ D'AFFICHAGE D'UNE IMAGE GLOBALE SUR DES SURFACES DE PROJECTION DE FORME LIBRE OU DES SURFACES DE PROJECTION INCLINÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2011 DE 102011076083**

(43) Veröffentlichungstag der Anmeldung:
**26.03.2014 Patentblatt 2014/13**

(73) Patentinhaber: **Fraunhofer Gesellschaft zur Förderung der angewandten Forschung E.V.**
**80686 München (DE)**

(72) Erfinder:
• **SIELER, Marcel**
**07745 Jena (DE)**
• **SCHREIBER, Peter**
**07749 Jena (DE)**

(74) Vertreter: **Schenk, Markus et al**
**Schoppe, Zimmermann, Stöckeler Zinkler, Schenk & Partner mbB**
**Patentanwälte**
**Radlkoferstrasse 2**
**81373 München (DE)**

(56) Entgegenhaltungen:
EP-A1- 1 061 408       WO-A1-2006/116536
WO-A1-2008/095584      WO-A1-2008/141247
WO-A1-2011/019398      DE-A1-102009 024 894
JP-A- 2003 177 466     US-A1- 2005 030 308

**Beschreibung**

Ausführungsbeispiele der Erfindung beziehen sich auf ein Projektionsdisplay und ein Verfahren zum Anzeigen eines Gesamtbilds.

Die Projektion von dynamischen Bildinhalten auf einem Schirm bzw. als virtuelles Bild mit einem digitalen Bildgeber auf Flüssigkristall-Basis beruht gemäß dem Stand der Technik auf Projektionsgeräten mit einem abbildenden optischen Kanal bzw. drei Kanälen, deren Strahlengänge sich vor der Projektionsoptik zur Realisierung der Farbmischung vereinen.

Insbesondere zeigt die US 2009 323 028 A1 farbsequenziell LED-beleuchtete Pico-Projektoren. Ferner wird in der US 2009 237 616 A1 ein Projektionsdisplay mit drei vor der Projektionsoptik kombinierten Farbkanälen beschrieben.

Verringert man jedoch die Abmaße der im Stand der Technik bekannten Systeme, um miniaturisierte Pico-Projektoren zu realisieren, kommt es insbesondere zu Helligkeitsverlusten des projizierten Bildes. Die Miniaturisierung bekannter Projektionssysteme ist aufgrund der Begrenzung des übertragbaren Lichtstroms durch die kleine Oberfläche des in diesen Systemen vorhandenen Bildgebers nur eingeschränkt möglich. Dieser Zusammenhang wird durch das optische Grundgesetz der Etendue-Erhaltung bestimmt. Die Etendue bzw. der Lichtleitwert einer Lichtquelle

$$E = 4\pi n^2 A \sin \Theta$$

ergibt sich aus ihrer leuchtenden Fläche A, dem Halbwinkel der Divergenz $\Theta$ und der Brechzahl n und bleibt bei einer idealen optischen Abbildung konstant. Reale Optiken vergrößern die Etendue bzw. verringern die Systemtransmission. Somit wird für eine Quelle mit gegebener Leuchtdichte für einen minimal übertragbaren Lichtstrom innerhalb eines projizierenden optischen Systems auch eine Minimalobjektfläche benötigt.

Ein generelles Problem ist, dass bei einkanaligen Projektionssystemen aufgrund von optischen Gesetzmäßigkeiten (z.B. natürliche Vignettierung, Abbildungsfehler) mit dieser abzubildenden Fläche in gleichem Maße auch die Systembaulänge wächst, was eine Miniaturisierung erschwert.

Eine Lösung für dieses Problem ist in der DE 102009024894 beschrieben. Dort wird ein Projektionsdisplay mit einer Lichtquelle und regelmäßig angeordneten optischen Kanälen beschrieben. Durch einen leicht verringerten Mittenabstand der Projektionslinsen gegenüber den bildgebenden Strukturen entsteht ein vom Arrayzentrum nach außen wachsender Versatz der jeweils bildgebenden Struktur und der entsprechenden Projektionsoptik, so dass eine Superposition der reellen Einzelabbildungen in einer endlichen Entfernung entsteht. Aufgrund der Aufteilung in mehrere Kanäle ist es möglich, den Abstand zwischen bildgebender Struktur und Projektionsoptik zu verringern, d.h. die Aufbauhöhe, so dass eine Miniaturisierung gleichzeitig mit anderen Vorteilen erhalten wird.

Allerdings treten Probleme auf, wenn die obigen Systeme in dem Zusammenhang mit gekrümmten oder verkippten Projektionsflächen verwendet werden. All die oben beschriebenen Systeme sind nur in Verbindung mit der Verwendung ebener Projektionsflächen ausgelegt. Allgemein ausgedrückt besteht das Problem in der Frontprojektion eines Bildes über sich stark verändernde Projektionsabstände bzw. geneigte, gekrümmte Flächen, Freiform-Schirmgeometrien unter Gewährleistung einer kontrastreichen und scharfen Abbildung. Für einen geneigten, ebenen Schirm kann durch eine aufwendige Verkippung von Objekt und Projektionsoptik gemäß der Scheimpflug-Bedingung eine scharfe Abbildung erreicht werden. Dieser bekannte Ansatz versagt aber bei gekrümmten Projektionsflächen. Die Verkippung vergrößert wiederum den notwendigen Bauraum. Soll sogar eine Adaptivität an verschiedene Verkippungen realisiert werden, so erfordert dies eine Mechanik zur Realisierung der Verkippung. zwischen bildgebender Struktur und Projektionsoptik, was dem Wunsch nach einer Miniaturisierung und nach niedrigen Herstellungskosten sowie nach robuster Bauweise entgegensteht. Eine erhöhte Blendenzahl könnte das Problem durch Erhöhung der Schärfentiefe lösen, aber eine solche erhöhte Blendenzahl geht auch immer mit einer geringeren Lichtstärke einher, was andere Probleme hervorruft und darüber hinaus ebenfalls einer Miniaturisierung entgegensteht, da dann das Problem auf die Lichtquelle verlagert würde.

Die WO 2006/116536 A1 bezieht sich auf elektronische Projektionssysteme und -verfahren. Ein Verfahren zum Erzeugen zusammengesetzter Bilder mit einem Projektionssystem, das einen ersten Projektor und mindestens einen zweiten Projektor umfasst, umfasst das Erzeugen einer Korrespondenzabbildung von Pixeln für Bilder durch Bestimmen von Versätzen zwischen Pixeln aus mindestens einem zweiten Bild aus dem zweiter Projektor und entsprechender Pixel aus einem ersten Bild von dem ersten Projektor, Empfangen eines Quellbildes, Verzerren des Quellbildes zumindest teilweise basierend auf der Korrespondenzabbildung, um ein verzerrtes Bild zu erzeugen, und Anzeigen des Quellbildes durch den ersten Projektor und Anzeigen des verzerrten Bilds durch den zweiten Projektor, um ein zusammengesetztes Bild zu erstellen.

Die WO 2011/019398 bezieht sich auf ein Verfahren zur Verwendung mit dreidimensionaler oder stereoskopischer Projektion, wobei Kompensationen für Übersprechen und differentielle Verzerrung für stereoskopische Bilder in einer Präsentation vorgesehen sind, so dass die projizierten Bilder reduziertes Übersprechen und reduzierte differentielle Verzerrung aufweisen.

Die JP2003177466 A bezieht sich auf die Bereitstellung eines Videosystems mit breitem Sichtfeld und hoher Leuchtdichte, welches das Problem löst, dass bei einem herkömmlichen Videosystem die Helligkeit und der rechte und linke Sichtfeldwinkel in umgekehrtem Verhältnis zueinander sind, und dass eine Erhöhung der Helligkeit entsprechend der Lichtstärke eines herkömmlichen Projektors begrenzt ist.

Die Aufgabe der vorliegenden Erfindung besteht deshalb darin, ein Projektionsdisplay und ein Verfahren zum Anzeigen eines Gesamtbildes zu schaffen, die die obigen Probleme zumindest teilweise überwinden, d.h. es ermöglichen, eine bessere Projektionsqualität bei gleicher oder vergleichbarer Miniaturisierung und gleichem oder ähnlichem apparativen Aufwand bei Verwendung von Projektionsfreiformflächen oder verkippten Projektionsflächen zu erhalten.

Diese Aufgabe wird durch den Gegenstand der unabhängigen Ansprüche gelöst.

Der Kerngedanke der vorliegenden Erfindung besteht darin, erkannt zu haben, dass eine höhere Projektionsqualität auch bei Verwendung von Projektionsfreiformflächen und verkippten Projektionsflächen bei vergleichbarer Miniaturisierung und vergleichbarem apparativem Aufwand erhalten werden kann, wenn der Bildgeber derart ausgelegt ist, dass sich Konstellationen von Punkten in den Teilbildern, die sich jeweils durch die Mehrkanaloptik in einem jeweiligen gemeinsamen Punkt in dem Gesamtbild überlagern, abhängig davon unterscheiden, welche Entfernung der jeweilige gemeinsame Punkt in dem Gesamtbild von der Mehrkanaloptik besitzt. Dadurch kann nämlich die unterschiedliche Entfernung der Punkte in der Projektionsfläche von der Mehrkanaloptik bzw. dem Projektionsdisplay korrigiert werden. Aufbauhöhe und apparativer Aufwand werden hierdurch nicht erhöht. Lediglich die Ausgestaltung des Bildgebers wird gegenüber einer Ausgestaltung geändert, bei der das Projektionsdisplay zur Projektion auf eine planparallele Projektionsfläche ausgelegt ist. Alternativ ist die Erzielung des Zieles möglich, indem der Bildgeber und die Mehrkanaloptik derart ausgebildet sind, dass eine Ausprägung eines Beitrags jeden Kanals zu dem Gesamtbild über das Gesamtbild hinweg örtlich abhängig davon variiert, welche Entfernung der jeweilige gemeinsame Punkt in dem Gesamtbild von der Mehrkanaloptik besitzt, denn dadurch können die Kanäle auf verschiedene Abstände eingestellt sein und geeignet zur Überlagerung kombiniert werden.

Als Bildgeber kann ein passiver Bildgeber, wie z.B. eine Schattenmaske, verwendet werden, oder ein aktiver Bildgeber, wie z.B. ein digitaler Bildgeber, in welchem Fall auch eine dynamische Adaption des Projektionsdisplays auf unterschiedliche Projektionsflächen möglich ist, indem die Teilbereiche in der Bildgebungsebene und die Einzelbilder, die in denselben erzeugt werden, geändert werden.

Die Projektionsoptiken der Mehrkanaloptik des Projektionsdisplays können eine Dezentrierung bezüglich der zugeordneten Teilbereiche des Bildgebers aufweisen, so dass das sich in der Projektionsfläche überlagernde Gesamtbild reell oder virtuell ist. Durch die Dezentrierung bzw. zentrale Stauchung oder Streckung zwischen den Projektionsoptiken und den zugeordneten Teilbereichen des Bildgebers kann insbesondere eine Projektionsdistanz des Gesamtbilds in der Projektionsfläche eingestellt werden.

Die Mehrkanaloptik kann ferner eine nachgeschaltete und mit den Projektionsoptiken der einzelnen Kanäle gemeinsam zusammenwirkende Gesamtlinse aufweisen, die ausgebildet ist, um kollimierte Strahlenbündel von den Projektionsoptiken zu refokussieren.

Bei weiteren Ausführungsbeispielen der vorliegenden Erfindung kann die nachgeschaltete Gesamtlinse als Optik mit variabler Brennweite ausgebildet sein, so dass eine mittlere Projektionsdistanz einstellbar ist.

Ausführungsbeispiele der vorliegenden Erfindung werden nachfolgend Bezug nehmend auf die beiliegenden Figuren, in denen gleiche oder gleich wirkende Elemente mit gleichen Bezugszeichen bezeichnet sind, näher erläutert. Es zeigen:

Fig. 1 ein schematisches Blockschaltbild eines Projektionsdisplays gemäß einem Ausführungsbeispiel der vorliegenden Erfindung;

Fig. 2a-2b schematische Seitenansichten von Projektionsdisplays gemäß unterschiedlicher Ausführungsformen;

Fig. 3 eine Seitenansicht eines Projektionsdisplays gemäß einem weiteren Ausführungsbeispiel

Fig. 4 eine Seitenansicht eines Projektionsdisplays gemäß einem weiteren Ausführungsbeispiel

Fig.5 eine Seitenansicht eines Projektionsdisplays mit jeweils zur Apertur einer jeweiligen Projektionsoptik dezentriertem Linsenscheitel;

Fig. 6 eine Seitenansicht eines Projektionsdisplays mit einer Rasteranordnung von Lichtquellen;

Fig. 7        eine Seitenansicht eines Projektionsdisplays mit einer zweidimensionalen Anordnung von Feld-Linsen;

Fig. 9        eine Seitenansicht eines Projektionsdisplays mit zwei Strahlteilern und gegenüberliegenden Lichtquellen zur zweiseitigen Beleuchtung eines reflektiven Bildgebers;

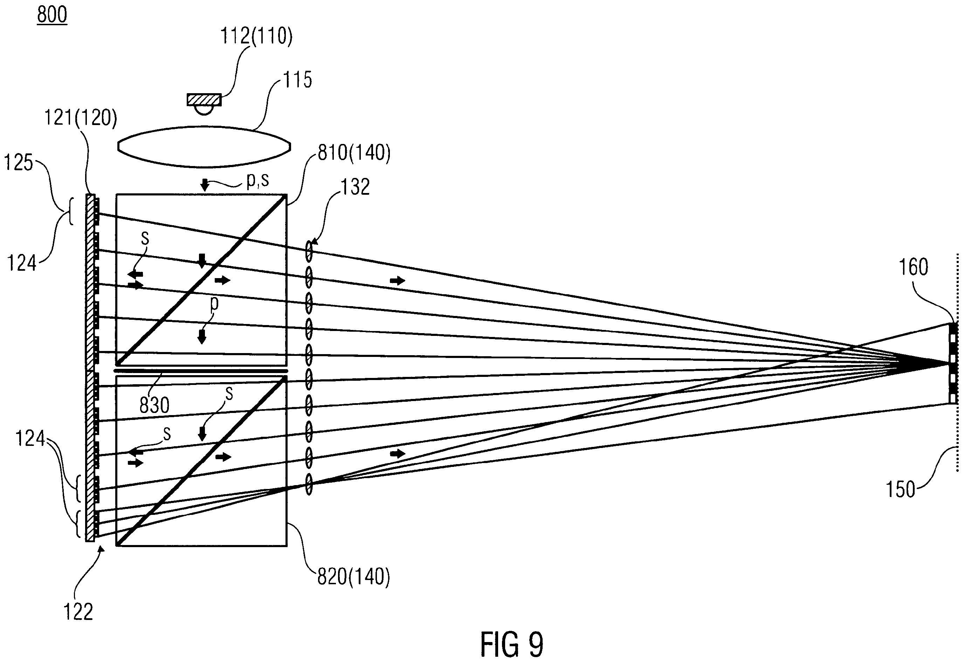

Fig. 9        eine Seitenansicht eines Projektionsdisplays mit zwei Strahlteilern und einer im Beleuchtungspfad dazwischenliegenden Halbwellenlängenplatte;

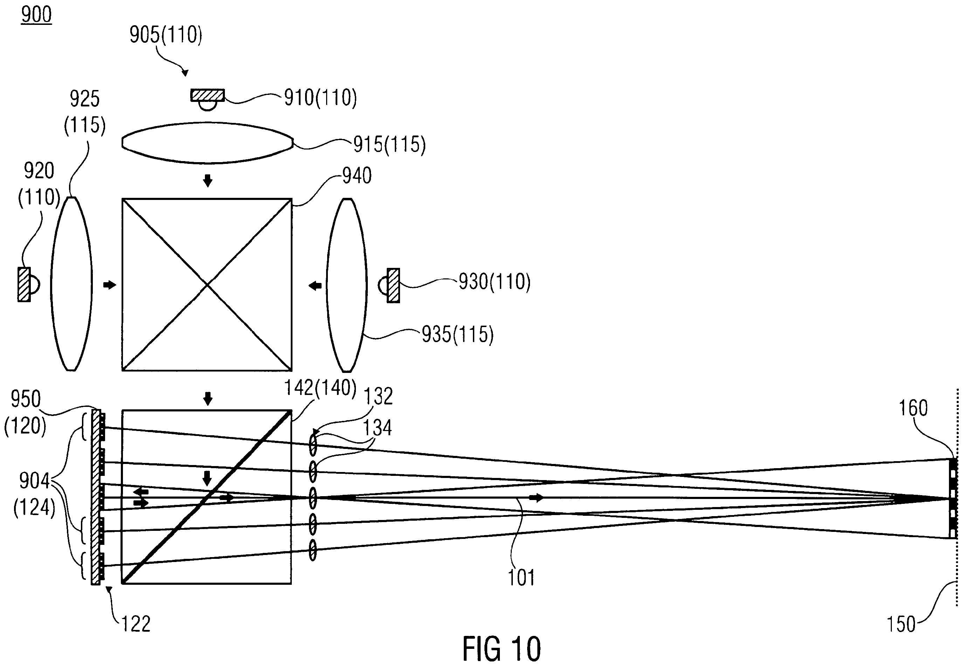

Fig. 10      eine Seitenansicht eines Projektionsdisplays mit einem reflektiven Bildgeber und einer dazu farbsequenziell synchronisierten RGB-Lichtquelle;

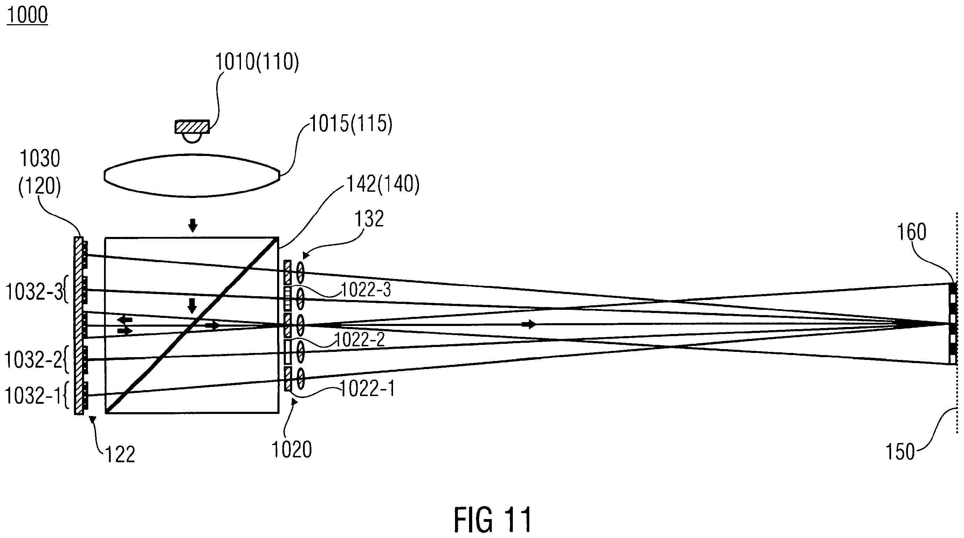

Fig. 11      eine Seitenansicht eines Projektionsdisplays mit einer Filteranordnung zum Erzeugen einer Farbmischung;

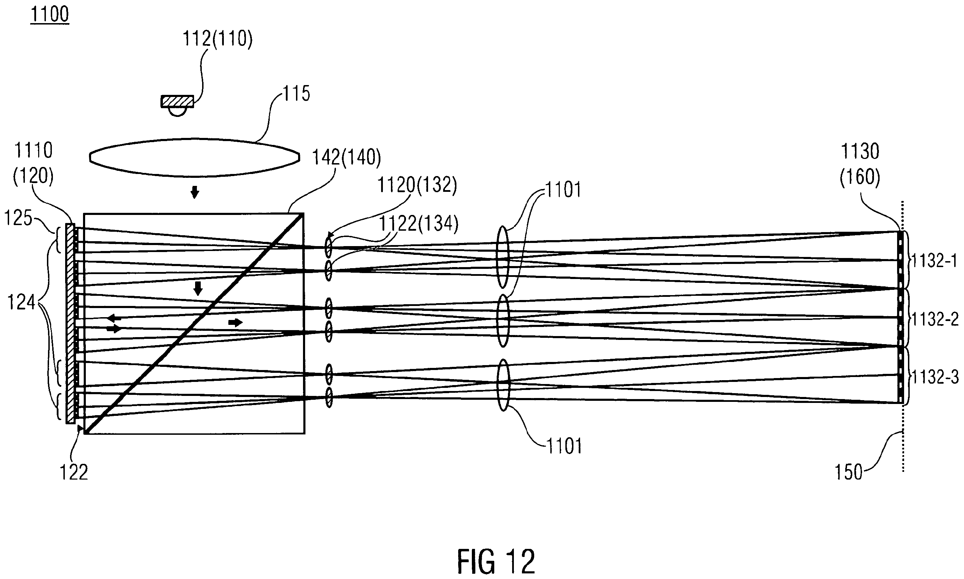

Fig. 12      eine Seitenansicht eines Projektionsdisplays, bei dem sich Abbildungen von Einzelbildern zu einem Gesamtbild mit einer höheren Auflösung überlagern;

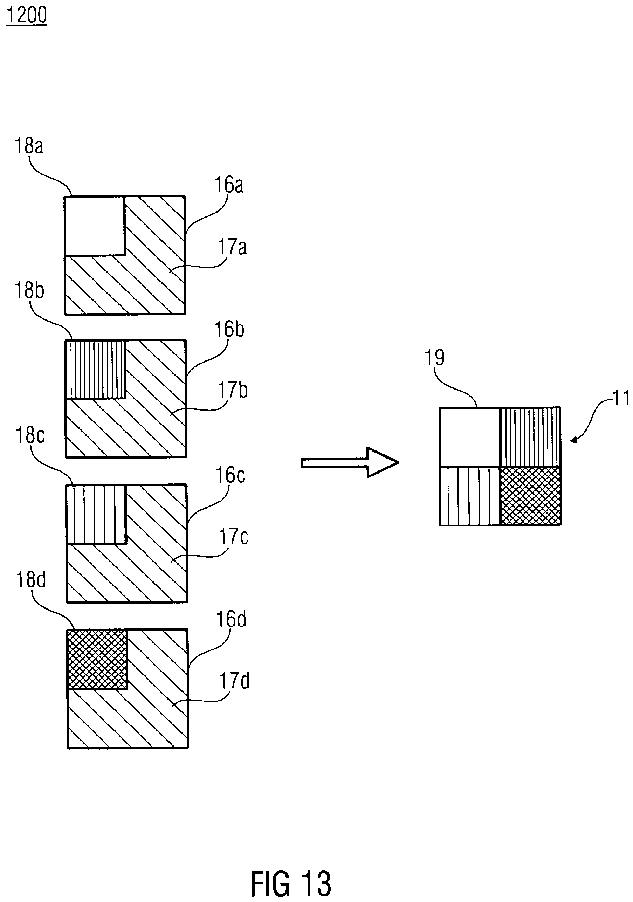

Fig. 13      eine schematische Darstellung zur Veranschaulichung einer Überlagerung von Pixeln zu einem Gesamtbild;

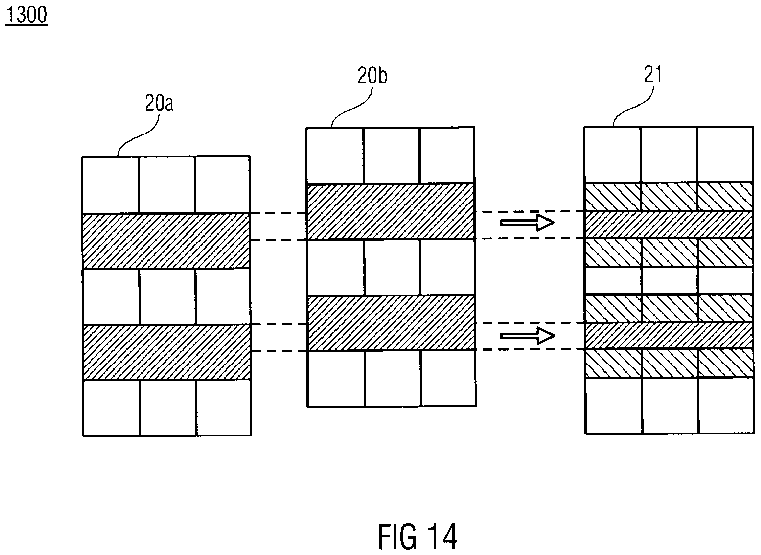

Fig. 14      eine schematische Darstellung zur Veranschaulichung einer Überlagerung von binären schwarz-weißen Teilbildern zu einem Gesamtbild;

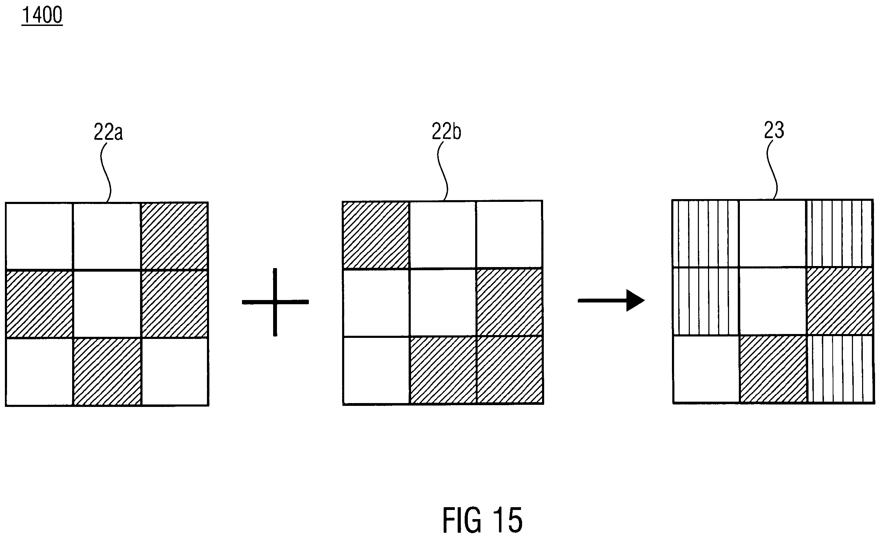

Fig. 15      eine schematische Darstellung zur Veranschaulichung einer weiteren Überlagerung von binären schwarz-weißen Teilbildern zu einem Gesamtbild;

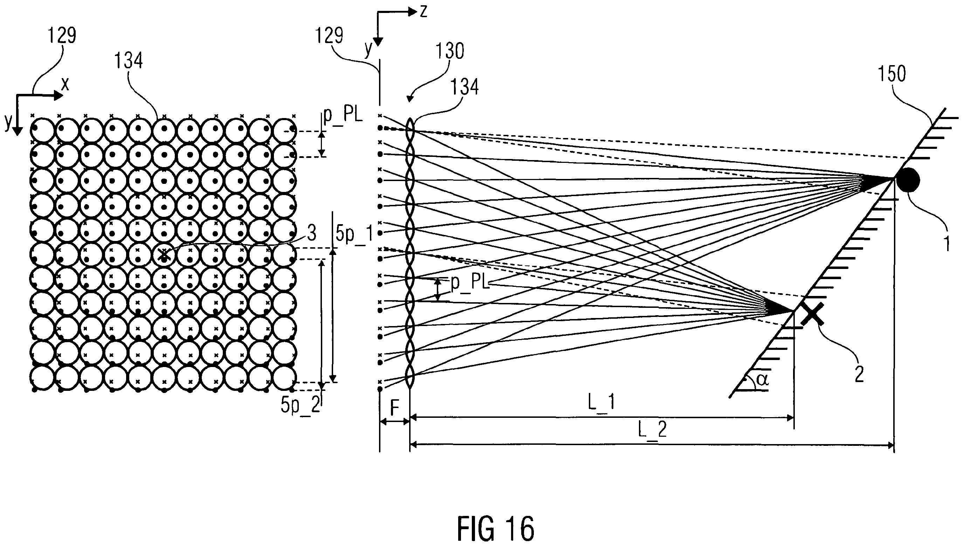

Fig. 16      eine schematische Darstellung einer Projektion auf eine 40° geneigte Projektionsfläche mit einem Projektionsdisplay gemäß einem Ausführungsbeispiel;

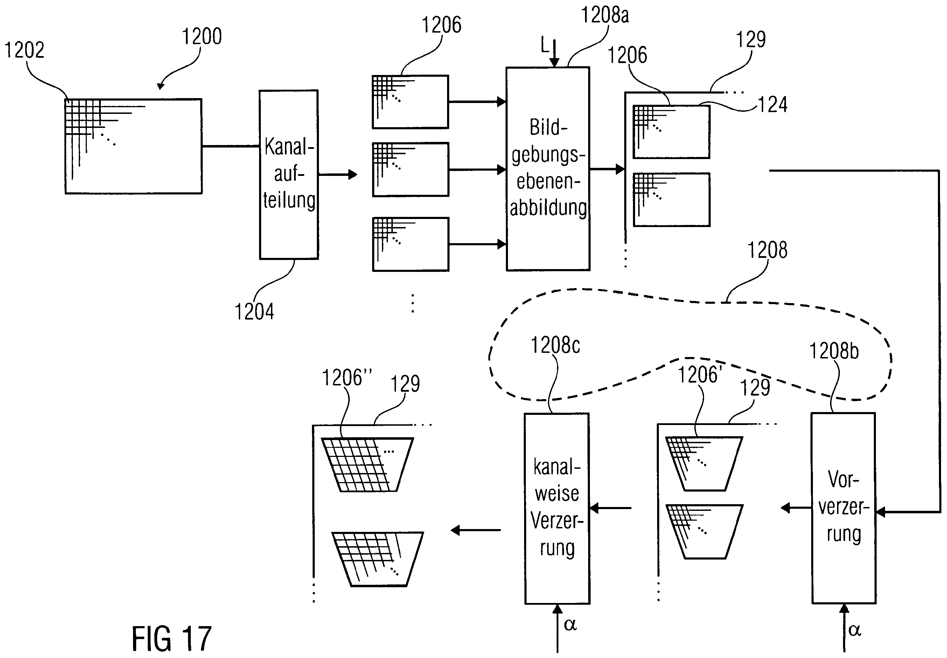

Fig. 17      eine schematische Veranschaulichung einer Verarbeitung innerhalb eines digitalen Bildgebers gemäß einem Ausführungsbeispiel; und

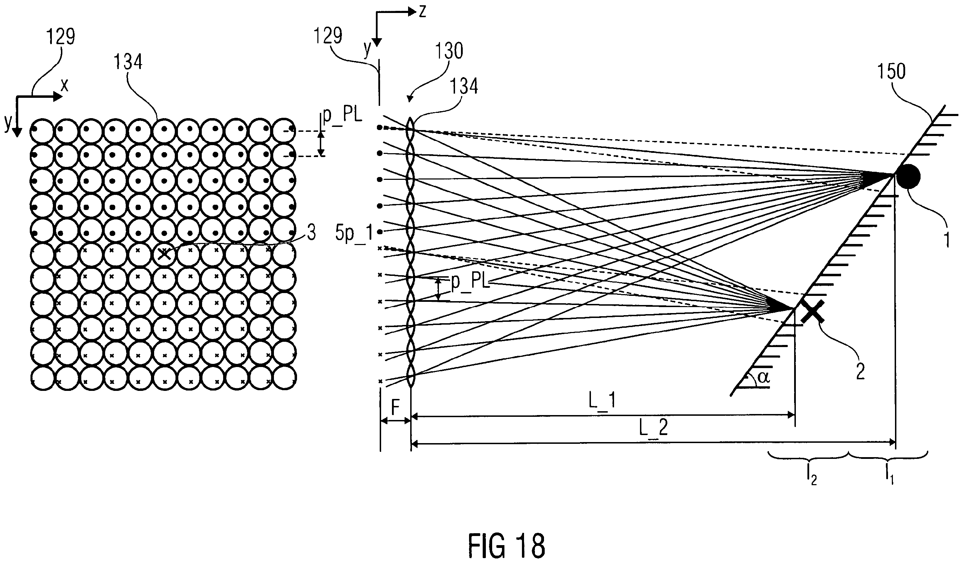

Fig. 18      eine schematische Darstellung einer Projektion auf eine 40° geneigte Projektionsfläche mit einem Projektionsdisplay gemäß einem weiteren Ausführungsbeispiel.

Bevor im Folgenden die vorliegende Erfindung anhand der Figuren näher erläutert wird, wird darauf hingewiesen, dass in den nachfolgend dargestellten Ausführungsbeispielen gleiche Elemente oder funktionell gleiche Elemente in den Figuren mit den gleichen Bezugszeichen versehen sind. Eine Beschreibung von Elementen mit gleichen Bezugszeichen ist daher gegenseitig austauschbar und/oder in den verschiedenen Ausführungsbeispielen aufeinander anwendbar.

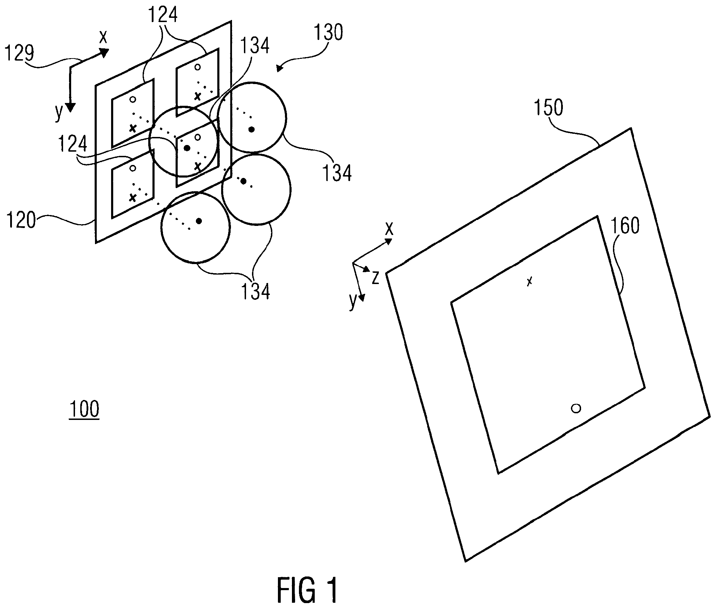

Fig. 1 zeigt ein Projektionsdisplay 100 gemäß einem Ausführungsbeispiel der vorliegenden Erfindung. Das Projektionsdisplay 100 weist einen Bildgeber 120 und eine Mehrkanaloptik 130 auf. Der Bildgeber 120 ist ausgebildet, um in einer Verteilung von Teilbereichen 124 einer Bildgebungsebene 129 des Bildgebers 120 Einzelbilder zu erzeugen bzw. darzustellen. Die Mehrkanaloptik 130 ist konfiguriert, um pro Kanal jeweils einen zugeordneten Teilbereich 124 des Bildgebers 120 abzubilden, und zwar so, dass sich die Abbildung der Einzelbilder in einer Projektionsfläche 150 zu einem Gesamtbild 160 zumindest teilweise überlagert,

In Fig. 1 ist das Projektionsdisplay 100 exemplarisch vierkanalig aufgebaut, d.h. der Bildgeber 120 erzeugt Einzelbilder in vier Teilbereichen 124 und die Mehrkanaloptik 130 ist dementsprechend vierkanalig aufgebaut mit beispielsweise einer jeweiligen Projektionsoptik 134 pro Kanal. Die Anzahl ist allerdings lediglich exemplarisch. Auch die zweidimensionale Verteilung der Teilbereiche 124 und der Projektionsoptiken 134 ist lediglich exemplarisch. Die Verteilung könnte auch entlang einer Linie realisiert sein. Zudem ist die Verteilung nicht auf regelmäßige zweidimensionale Verteilungen eingeschränkt. Wie später noch erörtert werden wird, ist der Mittenabstand der Projektionsoptiken 134 beispielsweise gegenüber einem Mittenabstand der Teilbereiche 124 in der Bildgebungsebene 129 verringert. Details hierzu werden noch im Folgenden geliefert.

Das Projektionsdisplay 100 von Fig. 1 ist nun so ausgelegt, dass die Projektionsfläche keine ebene, zu der Bildgebungsebene 129 parallele Projektionsfläche sein muss. Die Projektionsfläche, in der das Gesamtbild entsteht, in der sich also die Einzelbilder scharf überlagern, d.h. quasi der Schärfentiefenbereich, kann vielmehr eine Freifläche oder eine gegenüber der Bildgebungsebene 129 verkippte Projektionsfläche 150 sein, wie es in Fig. 1 exemplarisch dargestellt ist.

Um die Abweichung gegenüber der planparallelen Ausrichtung der Projektionsfläche 150 gegenüber der Bildgebungsebene 129 auszugleichen, ist der Bildgeber 120 derart ausgebildet, dass sich Konstellationen von Punkten in den Einzelbildern, die sich jeweils durch die Mehrkanaloptik 130 in einem jeweiligen gemeinsamen Punkt in dem Gesamtbild 160 überlagern, abhängig davon unterscheiden, welche Entfernung der jeweilige gemeinsame Punkt in dem Gesamtbild von der Mehrkanaloptik 130 besitzt. In Fig. 1 sind exemplarisch zwei solche gemeinsamen Punkte in dem Gesamtbild 160 angedeutet, nämlich einmal mit einem kleinen x und das andere Mal mit einem o. Die diesen Punkten über die Mehrkanaloptik 130 entsprechenden Punkte in den Einzelbildern der Teilbereiche 124 sind dementsprechend auch mit einem x bzw. einem o angedeutet. Die Lage der Punkte o bzw. die Lage der Punkte x in der Bildgebungsebene 129 bilden jeweils zusammen eine Konstellation. Die Konstellation der Punkte o und die Konstellation der Punkte x unterscheiden sich voneinander, um auszugleichen, dass die Entfernung des gemeinsamen Punktes x entlang der optischen Achse des Projektionsdisplays - in Fig. 1 exemplarisch die Normalenrichtung bzw. z-Achse zur Bildgebungsebene 129 - von dem Projektionsdisplay 100 bzw. der Mehrkanaloptik 130 kleiner ist als der Abstand des gemeinsamen Punktes o. Wie später noch detaillierter erörtert werden wird, schlägt sich der von der unterschiedlichen Entfernung herrührende Unterschied in den Konstellationen vornehmlich in einer größeren Ausdehnung im Sinne einer zentrischen Streckung der Konstellation der Punkte x relativ zu der Konstellation der Punkte o nieder. Die Konstellationen können sich aber auch abhängig davon unterscheiden, in welchem Raumwinkelbereich von der Mehrkanaloptik 130 aus betrachtet, wie z.B. relativ zu der optischen Achse - hier exemplarisch z -, der jeweilige gemeinsame Punkt o bzw. x liegt, um Abbildungsfehler der Mehrkanaloptik 130 bzw. der einzelnen Projektionsoptiken 134 auszugleichen. Insbesondere können die raumwinkelbereichsweisen Unterschiede so ausgestaltet sein, dass Abbildungsfehler der Mehrkanaloptik 130 kanalindividuell ausgeglichen werden. Die genauen Zusammenhänge werden noch aus der nachfolgenden Beschreibung detaillierter hervorgehen.

Noch einmal in anderen Worten ausgedrückt sei das Ausführungsbeispiel von Fig. 1 noch einmal anhand einer konkreten Implementierung erläutert, bei der sich exemplarisch Detailbilder aller vier Kanäle gegenseitig vollständig bzw. deckungsgleich überlappen. Wie bereits oben erwähnt, ist dies allerdings nicht unbedingt erforderlich. Eine andersartige Überlappung der Einzelbilder, um das Gesamtbild 160 zu ergeben, ist ebenfalls möglich.

Die Einzelbilder in den Teilbereichen 124 gleichen sich somit inhaltlich im Wesentlichen. Sie stellen alle eine Version des Gesamtbildes 160 dar. Gegebenfalls sind die Einzelbilder in den Teilbereichen 124 bzw. die Teilbereiche selbst verzerrt gegenüber dem beispielsweise rechteckigen Gesamtbild 160, und zwar mit Vorverzerrung, die für alle Einzelbilder gleich sein kann. Die Vorverzerrung korrigiert beispielsweise die Verzerrung, wie sie sich durch die Divergenz des Strahlengangs der Kanaleinzelabbildungen bzw. der Vergrößerung durch die Kanaleinzelabbildungen abhängig von ihrer Brennweite und dem Abstand zu der Projektionsfläche und die dadurch resultierende Maßstabsveränderung über das Gesamtbild 160 hinweg aufgrund der Abweichung der Projektionsfläche 150 von der eigentlichen Bildebene zur Mehrkanaloptik 130, die beispielsweise im Unendlichen liegen kann, ergibt. Die Vorverzerrung ist gegebenenfalls nicht über alle Kanäle hinweg identisch. Um eine über Aberrationen erster Ordnung (Trapez) hinausgehende Verzeichnung (3. Ordnung) zu adressieren, kann es vorteilhaft sein, die Einzelbilder bzw. Teilbereiche 124 unterschiedlich vorzuverzeichnen, da unterschiedliche Dezentrierungen der jeweiligen Kanäle vorliegen. Eine Veränderung der Konstellationen über das Array für geneigte Projektionsflächen kommt dann zusätzlich hinzu, wie es nun ausgeführt wird.

Die gegenüber dem Gesamtbild 160 vorverzerrten Einzelbilder in den Teilbereichen 124 unterscheiden sich nämlich gegenseitig, um die vorerwähnten Konstellationen von einem gemeinsamen Punkt in dem Gesamtbild 160 entsprechenden Punkten in den Teilbildern 124 zu realisieren, so dass die Schärfe des Gesamtbildes 160 über die gesamte laterale Ausdehnung trotz der Tiefenvariation der Projektionsfläche 150 entlang der optischen Achse z des Projektionsdisplays 100 erhalten bleibt.

Weitere Unterschiede in den Einzelbildern in den Teilbereichen 124 können durch die im Vorhergehenden erwähnte kanalweise Korrektur von Abbildungsfehlern der Mehrkanaloptik 130 herrühren, die allerdings beispielsweise nicht von der lateralen Variation des Abstands der Projektionsfläche von dem Projektionsdisplay 100 abhängt.

Auf diese Weise kann also das Gesamtbild 160 auf die Projektionsfläche 150 so projiziert werden, dass es aus einem bestimmten Blickwinkel, wie z.B. Lotrecht auf die Projektionsfläche 150, unverzerrt und scharf erscheint.

Das Projektionsdisplay 100 von Fig. 1 kann unterschiedliche Zwecke erfüllen und in unterschiedlichen Anwendungsfällen eingesetzt werden. Beispielsweise handelt es sich bei dem Projektionsdisplay von Fig. 1 um ein solches, dass dazu vorgesehen ist, ein vorbestimmtes Gesamtbild auf eine vorbestimmte Projektionsfläche 150 scharf zu projizieren, die im Bezug auf das Projektionsdisplay 100 eine konstante und fest eingestellte Lage aufweist. Beispielsweise könnte das Projektionsdisplay 100 dazu vorgesehen sein, auf eine Skulptur, deren Außenoberfläche die Projektionsfläche 150 bildet, ein Gesamtbild 160 zu projizieren, das beispielsweise eine Aufschrift oder einen sonstigen Inhalt darstellt, wobei bei dieser Form der Anwendung das Projektionsdisplay 100 dazu vorgesehen ist, in einem festen Lagebezug zu der Skulptur angeordnet zu werden und zu bleiben. In diesem Fall kann es sich beispielsweise bei dem Bildgeber 120 um eine Schattenmaske oder eine andere fein strukturierte Maske handeln, die beispielsweise von der der Mehrkanaloptik 130 gegenüberliegenden Rückseite aus beleuchtet wird, wie z.B. mittels einer Köhlerschen Beleuchtung. Die Einzelbilder könnten in den Teilbereichen 124 binär codiert, grauskaliert oder sogar farbcodiert realisiert sein, und zwar entweder in analoger bzw. kontinuierlicher oder in pixelierter Form. Insbesondere könnte es sich beispielsweise bei der Maske 120 um ein Dia handeln, oder bei den Teilbereichen 124 um einzelne Dias. Die Codierung der Bildinformation könnte insbesondere auf dem Wege einer Abbildung der Bildinformation auf eine Transmissionsskala realisiert sein. Ein Beispiel für eine Rückseitenbeleuchtung wird im Folgenden noch erläutert. Bildgeber 120 in Form einer Maske könnten allerdings aber auch reflektiv arbeiten, um in den Teilbereichen 124 statische Einzelbilder zu erzeugen. Auch für reflektive Systeme werden im Folgenden noch Beispiele vorgestellt.

Anstelle eines passiven bzw. statischen Bildgebers 120 kann allerdings auch ein aktiver Bildgeber, wie z.B. ein digitaler Bildgeber 120 verwendet werden. Der Bildgeber kann transmissiv oder reflektiv arbeiten. Allerdings ist es ebenfalls möglich, dass der Bildgeber 120 selbstleuchtend ist, wie z.B. ein OLED- oder LED- Display. In diesen Fällen ist es möglich, dass der Bildgeber beispielsweise, wie es im Folgenden noch erläutert wird, intern ausgebildet ist, die vorerwähnten Verarbeitungen durchzuführen, die aus eingehenden Pixelarraydaten, die das Gesamtbild 160 darstellen, die Lage und den Inhalt, nämlich die Einzelbilder der Teilbereiche 124, erst liefern, um von dem Bildgeber 120 daraufhin angezeigt zu werden, und zwar angepasst zu einer bestimmten relativen Lage der Projektionsfläche 150 zu dem Projektionsdisplay 100, wodurch aber auch insbesondere eine Anpassung an andere Projektionsflächengeometrien möglich ist, indem die Vorverarbeitungen entsprechend angepasst bzw. noch mal durchgeführt werden. Hierauf wird ebenfalls im Folgenden noch näher eingegangen werden.

Schließlich wird noch darauf hingewiesen, dass der Bildgeber 120 und die Mehrkanaloptik 130 fest zueinander gehaltert sein können, wie z.B. in einem Gehäuse verbaut sind. Insbesondere kann das Projektionsdisplay 100 beispielsweise in einem mobilen Gerät, wie z.B. einem Handy, einem PDA, einem Notebook oder einem sonstigen tragbaren Computer oder dergleichen verbaut sein.

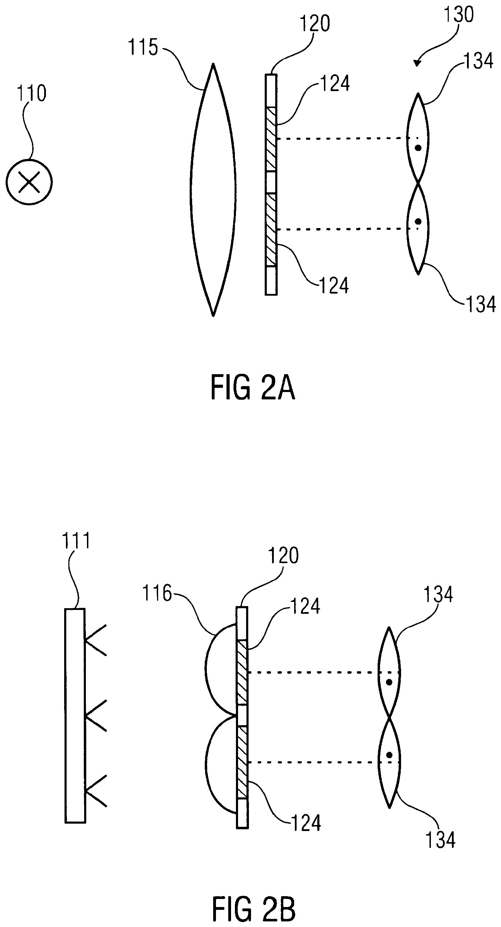

Nachdem im Vorhergehenden ein Ausführungsbeispiel für ein Projektionsdisplay allgemein erst einmal beschrieben wurde, soll Bezug nehmend auf Fig. 2a-d auf unterschiedliche Möglichkeiten eingegangen werden, wie der optische bzw. apparative Teil der Projektionsvorrichtung 100 gestaltet sein kann. Die Ausführungsbeispiele der Figuren 2a-d sind nicht abschließend zu verstehen, stellen aber vorteilhafte Ausgestaltungen bei der Umsetzung dar.

Fig. 2a zeigt eine Implementierung eines Projektionsdisplays gemäß Fig. 1, bei der der Bildgeber 120 transmissiv arbeitet bzw. die Einzelbilder in den Teilbereichen 124 dadurch darstellt, dass die Helligkeitsvariation bzw. Farbvariation in den Einzelbildern durch laterale Variation in der Transmission dargestellt bzw. codiert wird. Wie es in Fig. 2a gezeigt ist, kann zur Realisierung einer Rückseitenbeleuchtung, d.h. einer Beleuchtung von einer der Mehrkanaloptik 130 abgewandten Seite des Bildgebers 120 aus, die Projektionsvorrichtung eine Lichtquelle 110 und eine Feldlinse 115 aufweisen. Vorzugsweise wird der Abstand zwischen den Teilbildern 124 und der Feldlinse 115 klein gewählt, um eine vollständige Ausleuchtung des Bildgebers 120 zu realisieren. Vorzugsweise wird zusätzlich oder alternativ eine Köhlersche Beleuchtung der Mehrkanaloptik 134 realisiert, wonach die Feldlinse 115 die Lichtquelle 110 in die Öffnung der Pupille der Projektionsoptik 130 abbildet.

Fig. 2b zeigt, dass anstelle einer Feldlinse auch ein Feldlinsenarray 116 verwendet werden könnte, und dass zusätzlich oder alternativ anstelle einer punktförmigen Lichtquelle 110 eine flächige Lichtquelle 111 für eine Ausleuchtung rückseitig positioniert sein könnte, d.h. so, dass das Feldlinsenarray 116 bzw. die Feldlinse 115 zwischen Lichtquelle 111 und Bildgeber 120 angeordnet ist. Auch hier kann eine Köhlersche Beleuchtung realisiert werden. Bei der flächigen Lichtquelle kann es sich beispielsweise um ein Array aus LEDs mit zugeordneten Kollimationsoptiken zur Realisierung von ebenfalls sehr flach aufgebauten Beleuchtungseinheiten handeln.

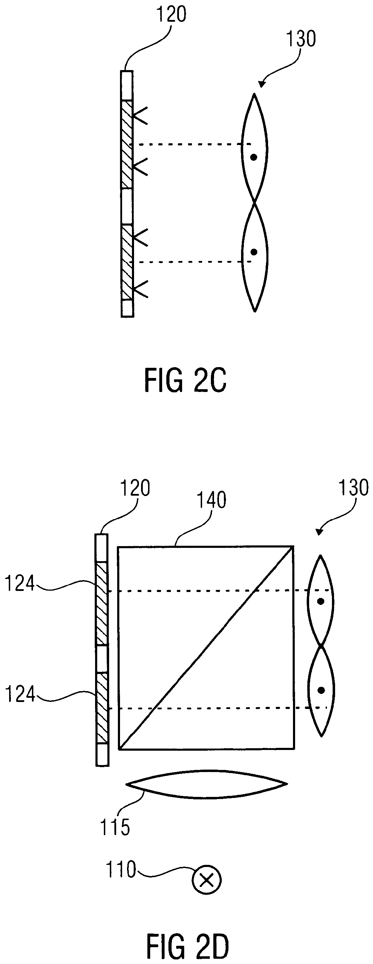

Fig. 2c zeigt, dass als Bildgeber 120 aber auch ein selbstleuchtender Bildgeber, wie z.B. ein digitaler Bildgeber, verwendet werden kann. Die Leuchttechnologie könnte OLEDbasiert, LED-basiert, TFT-basiert oder anders ausgestaltet sein.

Fig. 2d zeigt einen reflektiven Aufbau des Projektionsdisplays, wonach der Bildgeber 120 ein reflektiver Bildgeber ist und eine Vorderseitenbeleuchtung mittels eines zwischen Mehrkanaloptik 130 und Bildgeber 120 angeordneten Strahlteilers 140 realisiert wird, der seitlich über beispielsweise eine Kombination aus Kondensoroptik 115 und Lichtquelle 110 angestrahlt wird, um die Teilbereiche 124 des Bildgebers 120 auszuleuchten. Details hierzu gehen noch aus der nachfolgenden Erörterung hervor.

Bei dem Bildgeber 120 kann es sich beispielsweise um einen reflektiven LCD-Bildgeber 120 handeln, ebenso wie es sich bei dem Bildsensor der Ausführungsbeispiele nach Fig. 2a und 2b beispielsweise um transmissive LCD-Bildgeber handeln könnte.

Nachdem nun im Vorhergehenden grundsätzliche Implementierungsmöglichkeiten des Ausführungsbeispiels von Fig. 1 beschrieben worden sind, wird anhand der nachfolgenden Figuren auf mögliche Details der optischen Anordnung eines Projektionsdisplays eingegangen. Zur Erläuterung des optischen Aufbaus wird vorerst von dem Fall ausgegangen, dass die Projektionsfläche 150 eben ist und zu der Bildgebungsebene des Bildgebers parallel verläuft. Aus diesen Ausführungen wird aber auch hervorgehen, dass der optische Aufbau des Projektionsdisplays dem Wunsch nach einer scharfen Projektion auf eine anders geformte oder gelegene Projektionsfläche dadurch entgegenkommt, dass aufgrund des mehrkanaligen optischen Aufbaus die optische Schärfentiefe ohnehin grundsätzlich vorhanden ist. Aufgrund der in der Regel sehr kurzen Brennweiten von beispielsweise wenigen Millimetern ist nämlich der Schärfentiefebereich jeden Einzelprojektors bzw. jeden Kanals im Array 132 sehr hoch im Vergleich zu einer konventionelle einkanaligen Anordnung. Dieser Umstand wird gemäß den Ausführungsbeispielen der vorliegenden Erfindung ausgenutzt, um die tatsächliche Schärfe der Projektion auf eine verkippte oder freiflächenformartige Projektionsfläche dadurch endgültig herzustellen, dass die Einzelbilder bzw. Teilbereiche geeignet gegenüber einer planparallelen Ausrichtung der Projektionsfläche verändert werden, was in dem Fall eines digitalen Bildgebers lediglich beispielsweise eine digitale Bildvorverarbeitung notwendig macht. Erst im Anschluss an diese Beschreibung wird wieder auf den Fall eingegangen, dass die Projektionsfläche eben nicht planparallel zu der Bildgebungsebene ausgerichtet ist bzw. nicht sei muss und auch die zusätzlichen Maßnahmen, die erforderlich sind, um auf die Abweichung gemäß Ausführungsbeispielen der vorliegenden Erfindung zu reagieren.

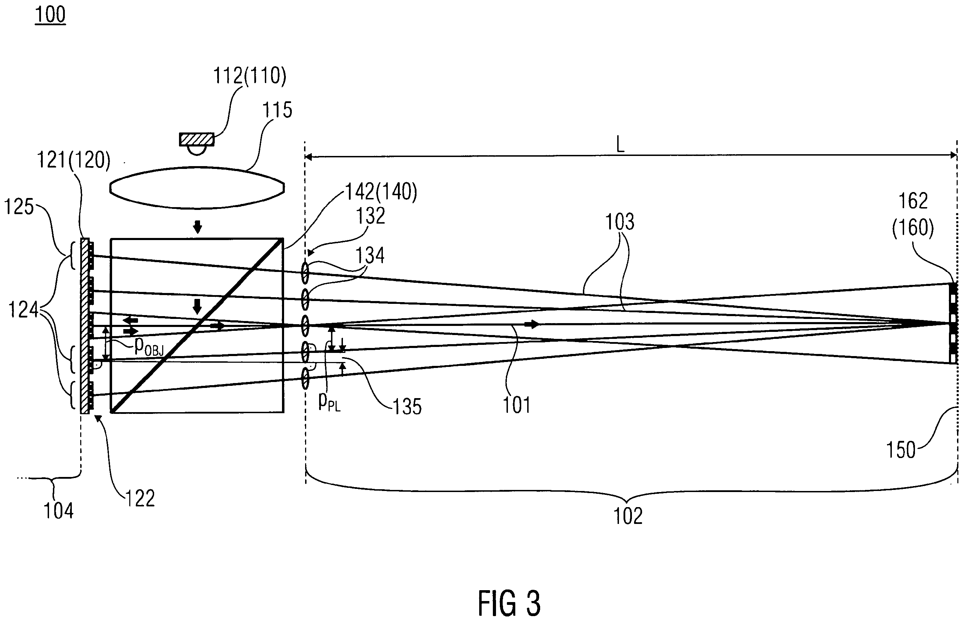

Fig. 3 zeigt eine Seitenansicht eines Projektionsdisplays 100 gemäß einem Ausführungsbeispiel der vorliegenden Erfindung. Das in Fig. 1 gezeigte Projektionsdisplay 100 weist eine Lichtquelle 110, einen hier exemplarisch reflektiv ausgeführten Bildgeber 120, eine zweidimensionale Anordnung 132 von Projektionsoptiken 134 als Mehrkanaloptik 130 und einen Strahlteiler 140 auf. Hierbei ist der Bildgeber 120 ausgebildet, um in einer zweidimensionalen Verteilung 122 von Teilbereichen 124 desselben Einzelbilder darzustellen. Ferner ist die zweidimensionale Anordnung 132 von Projektionsoptiken 134 konfiguriert, um einen zugeordneten Teilbereich 125 des Bildgebers 120 entlang optischer Achsen 103 abzubilden, so dass sich Abbildungen der Einzelbilder in der Projektionsfläche 150 zu einem Gesamtbild 160 überlagern. Schließlich ist der Strahlteiler 140 in einem Strahlengang zwischen Bildgeber 120 und der zweidimensionalen Anordnung 132 von Projektionsoptiken einerseits und im Strahlengang zwischen der Lichtquelle 110 und dem Bildgeber 120 andererseits angeordnet.

Insbesondere kann bei weiteren Ausführungsbeispielen der Strahlteiler 140 polarisierend wirken und der reflektive Bildgeber 120 ausgebildet sein, um die Einzelbilder in Form einer Polarisationsbeeinflussung darzustellen.

Das Projektionsdisplay kann eine regelmäßige, zweidimensionale Anordnung von bildgebenden Bereichen auf dem Bildgeber 120 aufweisen, der beispielsweise als Flüssigkristall-Bildgeber 121 ausgebildet ist, einen Strahlteiler 140, der beispielsweise als polarisierender Strahlteiler 142 ausgebildet ist, und die zweidimensionale Anordnung 132 von Projektionsoptiken 134. Wie in Fig. 3 gezeigt, durchläuft Licht der Lichtquelle 110, die beispielsweise als LED 112 ausgebildet ist, zunächst eine Kondensoroptik 115 und wird dann auf den polarisierenden Strahlteiler 142 gelenkt. Von dort wird es schließlich polarisiert in Richtung des reflektiven Bildgebers 120, der beispielsweise ein LCoS(Liquid Crystal on Silicon, Flüssigkristall auf Silizium)-Bildgeber ist, reflektiert.

Je nach Grauwert des darzustellenden Bildpunktes dreht der beispielsweise digitale Bildgeber die Polarisationsrichtung des an ihm reflektierten Lichts und steuert somit die Transmission beim zweiten Durchgang durch den polarisierenden Strahlteiler. Das schnelle pixelweise Schalten der Spannungen bzw. Kristalldrehungen ermöglicht dabei die Darstellung von dynamischen Bildinhalten.

Die in Fig. 3 gezeigten Projektionsoptiken 134 können beispielsweise Mikrolinsen sein, die in einer regelmäßigen, zweidimensionalen Anordnung als Projektionsobjektive ausgebildet sind, die jeweils einen Teilbereich 125 des Bildgebers 120 auf die Projektionsfläche 150 bzw. einen Schirm abbilden. Durch die Verwendung solch einer Projektionsoptikanordnung wird es ermöglicht, die Baulänge des Gesamtsystems gegenüber herkömmlichen Einkanal-Projektoren gleicher Bildgröße drastisch zu reduzieren. Während eine geringe Baulänge des Projektionsdisplays bzw. Projektionssystems aus Brennweiten der Projektionsoptiken bzw. Linsen von beispielsweise wenigen Millimetern resultiert, wobei deren Brennweiten wiederum von den Abmaßen des Strahlteilers abhängen, sorgt eine Vervielfachung der Objektflächen bzw. lateralen Ausdehnung für eine proportionale Steigerung der Bildhelligkeit. Man erhält somit im Vergleich zu miniaturisierten Einkanal-Projektoren eine Baulänge, die die Dicke des Strahlteilers nur um wenige Millimeter überschreitet, und dies bei vergleichbarer lateraler Ausdehnung und Projektionsdistanzen.

Bei weiteren Ausführungsbeispielen kann das Projektionsbild durch Überlagerung, Aneinandersetzen oder Verschachteln der Abbildungen von Einzelkanälen der Anordnung entstehen.

Bei weiteren Ausführungsbeispielen weisen die Projektionsoptiken 134, wie in Fig. 3 beispielhaft gezeigt, eine Dezentrierung 135 bezüglich der zugeordneten Teilbereiche 124 auf.

Im allgemeinen kann die Dezentrierung als zentrale Stauchung oder Streckung bezüglich einer zentralen optischen Achse 101 bzw. als lateraler Versatz der Projektionsoptiken 134 bezüglich der zugeordneten Teilbereiche 124 des Bildgebers 120 aufgefasst werden. Die Dezentrierung der Projektionsoptiken bezüglich der zugeordneten Einzelbilder auf den Bildgeber ist entscheidend für die Projektionsdistanz bzw. den Projektionsabstand. Aufgrund einer großen Tiefenschärfe der Teilbilder hängt die Schärfe an der Projektionsdistanz bzw. dem Projektionsabstand nur eingeschränkt von der schirmseitigen Fokussierung der einzelnen Projektionsoptiken ab. Objektseitig kann, wie bereits erwähnt, die Fokussierung der Projektionsoptiken 134 beispielsweise relativ zur kurzen Brennweite der Projektionsoptiken genau so eingestellt worden sein, dass sich die Bildgebungsebene 129 in der Brennweite der Projektionsoptik 130 befindet. Das ist aber nicht zwingend. Für virtuelle Bilder oder sehr nahe Projektionsabstände kann, wie ebenfalls erwähnt, die Bildgebungsebene 129 kurz davor oder dahinter befindet. Je nach dem liegt dann die schirmseitige Fokussierung beispielsweise im Unendlichen usw., aber der Schärfentiefenbereich der einzelnen Kanäle ist aufgrund der relativ kurzen Brennweiten groß. Es ist dieser Umstand, der gemäß Fig. 1 und auch der nachfolgenden Beschreibung ausgenutzt wird, wenn die Bild- bzw. Projektionsfläche 150 eben nicht planparallel zu der Bildgebungsebene 129 verläuft, sondern aus dieser heraus verkippt oder anders geartet gemäß einer Freiformfläche variiert.

Durch einen leicht verringerten Mittenabstand (Pitch) der Projektionsoptiken bzw. Projektionslinsen gegenüber den bildgebenden Strukturen entsteht ein von der zentralen optischen Achse 101 der zweidimensionalen Anordnung 132 von Projektionsoptiken 134 bzw. vom Array-Zentrum (Rasterzentrum) nach außen wachsender Versatz 135 der jeweiligen bildgebenden Struktur und der entsprechenden Projektionsoptik. Die so entstehende leichte Verkippung der optischen Achsen 103 äußerer Projektionsoptiken 134 bzw. Projektoren gegenüber der zentralen optischen Achse 101 bzw. des Zentralkanals sorgt für eine Überlagerung (Superposition) von Einzelabbildungen in der Bildebene bzw. Projektionsfläche 150 zu dem Gesamtbild 160. Die Bildebene bzw. Projektionsfläche kann hierbei im Unendlichen liegen oder sich in einem endlichen Abstand von der Projektionsoptik vor dem Bildgeber oder hinter dem Bildgeber befinden. Wie in Fig. 1 gezeigt, ist der Bereich vor dem Bildgeber durch den Bereich 102 rechts von bzw. im Strahlengang nach der zweidimensionalen Anordnung 132 von Projektionsoptiken 134 definiert, während der Bereich hinter dem Bildgeber durch den Bereich 104 links von dem Bildgeber 120 bzw. auf der dem Strahlteiler 140 abgewandten Seite des Bildgebers 120 definiert ist. Die einzelnen Abbildungen können sich beispielsweise auf einem Schirm zu dem Gesamtbild überlagern.

Hierbei sind keine weiteren makroskopischen, optischen Elemente zur Projektion im Strahlengang erforderlich. Die Projektionsdistanz bzw. Projektionsentfernung L des Array-Projektionsdisplays (d. h. der mittlere Abstand L der Projektionsfläche 150 von der zweidimensionalen Anordnung 132 von Projektionsoptiken 134 senkrecht zu ihr), die im Fall einer nicht planparallelen Projektionsfläche 150 beispielsweise eine mittlere Projektionsdistanz ist, ergibt sich aus der Brennweite der Projektionsoptik f, dem Mittenabstand der Projektionsoptiken $p_{PL}$ und dem Mittenabstand der Bilder $p_{OBJ}$. Die Vergrößerung M der Abbildungen folgt aus dem Verhältnis der Projektionsentfernung L zur Brennweite der Projektionslinse f. Hierbei gelten die folgenden Beziehungen:

$$L = \frac{f \cdot p_{PL}}{p_{OBJ} - p_{PL}} \qquad\qquad M = \frac{L}{f} = \frac{p_{PL}}{p_{OBJ} - p_{PL}} \, .$$

Das Verhältnis der Mittenabstände von Objektstrukturen zu Projektionsoptiken bzw. deren Differenz steuert somit die Projektionsentfernung. Dabei ist zu beachten, dass in dem Fall einer nicht planparallelen Projektionsfläche 150 der Mittenabstand der Teilbereiche 124 $p_{OBJ}$ beispielsweise der Mittelwert aller einander korrespondierender Punkte in den Einzelbildern darstellt, oder einen Mittelwert der Abstände der Flächenschwerpunkte der Teilbereiche 124, die beispielsweise verzerrt sein können, und zwar einerseits zum Ausgleich der optischen Verzerrung, wie sie im Vorhergehenden Bezug nehmend auf Fig. 1 beschrieben worden ist, und andererseits zur lokalen Schärfennachregelung andererseits. Auf Details hierzu wird später wieder eingegangen.

Ist der Mittenabstand der Projektionsoptiken kleiner als der der bildgebenden Strukturen, entsteht ein reelles Bild in einem definierten Abstand. In dem in Fig. 1 gezeigten Fall ist der Mittenabstand $p_{PL}$ der Projektionsoptiken 134 kleiner als der Mittenabstand $p_{OBJ}$ der zugeordneten Teilbereiche 124. Daher ist bei dem Ausführungsbeispiel in Fig. 1 ein sich in der Projektionsfläche 150 überlagerndes Gesamtbild 162 reell. Dieses Beispiel wurde auch Fig. 1 zugrundegelegt.

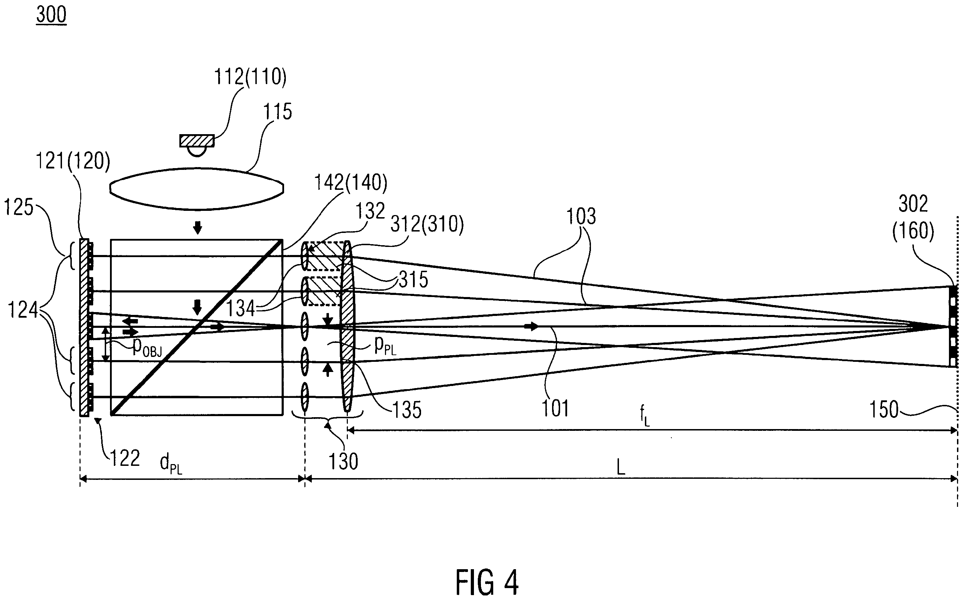

Fig. 4 zeigt eine Seitenansicht eines Projektionsdisplays gemäß einem weiteren Ausführungsbeispiel. Bei dem in Fig. 4 gezeigten Ausführungsbeispiel weist die Projektionsoptik 130 ferner eine bezüglich der zweidimensionalen Anordnung 132 von Projektionsoptiken 134 nachgeschaltete und mit der zweidimensionalen Anordnung 132 von Projektionsoptiken 134 gemeinsam zusammenwirkende Gesamtlinse 310 auf. Nachgeschaltet bedeutet in diesem Zusammenhang, dass die Gesamtlinse 310 im Strahlengang nach der zweidimensionalen Anordnung 132 von Projektionsoptiken 134 angeordnet ist. In Fig. 4 ist die Gesamtlinse 310 insbesondere ausgebildet, um kollimierte Strahlenbündel 315 von den Projektionsoptiken 134 zu refokussieren, so dass die Bildebene bzw. Projektionsfläche 150 eines Gesamtbildes 302 in einer Brennebene der Gesamtlinse 310 liegt, bzw. die lokal von einer planparallelen Anordnung abweichende Projektionsfläche 150 im Schärfentiefenbereich liegt. Dieser Sachverhalt ist in Fig. 4 so dargestellt, dass die Projektionsfläche 150, wo sich die einzelnen Abbildungen zum Gesamtbild 302 überlagern, einen mittleren Abstand $f_L$ von der Gesamtlinse 310 hat. Ferner kann der Abstand $d_{PL}$ der zweidimensionalen Anordnung 132 von Projektionsoptiken 134 von dem Bildgeber 120 beispielsweise so eingestellt sein, dass er in etwa der Brennweite der Projektionsoptiken 134 entspricht.

In Fig. 4 ist zu erkennen, dass die Projektionsoptiken 134 bezüglich der zugeordneten Teilbereiche 124 zentriert sind und kollimierend wirken. Das bedeutet, dass bei diesem Ausführungsbeispiel der Mittenabstand $p_{PL}$ der Projektionsoptiken 134 gleich dem Mittenabstand $p_{OBJ}$ der zugeordneten Teilbereiche 124 ist.

Modifiziert man demnach den Aufbau so, wie es in Fig. 4 beispielhaft gezeigt ist, indem der Abstand $d_{PL}$ der Projektionsoptiken zum Bildgeber so eingestellt ist, dass die einzelnen Bilder im Unendlichen entstehen, der Pitch der Teilbilder dem Pitch der Projektionsoptiken entspricht, und ordnet man die Gesamtlinse 310 beispielsweise in Form einer Sammellinse 312 im Strahlengang nach der zweidimensionalen Anordnung von Projektionsoptiken bzw. der Array-Optik an, so entsteht das Gesamtbild 302 in der Brennebene der Linse 310. Bei Nutzung einer Sammellinse wird ein reelles Bild auf einen Schirm projiziert. Vorteilhaft bei der in Fig. 4 gezeigten Ausführung ist eine beispielsweise verglichen mit dem in Fig. 3 dargestellten Aufbau geringere Vignettierung achsenferner Projektionskanäle 103 und die Möglichkeit, durch Einsatz einer variablen Sammel- oder Zerstreuungslinse z. B. in Form eines Zoom-Objektivs oder einer Flüssigkeitslinse, unterschiedliche mittlere Projektionsabstände einzustellen.

Insbesondere kann somit die in Fig. 4 gezeigte nachgeschaltete Gesamtlinse 310 als Optik mit variabler Brennweite ausgebildet sein, so dass eine Projektionsdistanz einstellbar ist. In Fig. 4 ist zu erkennen, dass die Projektionsdistanz L abgesehen von einer länglichen Ausdehnung der Projektionsoptikanordnung 130 im Wesentlichen durch die Brennweite $f_L$ der Gesamtlinse 310 gegeben ist.

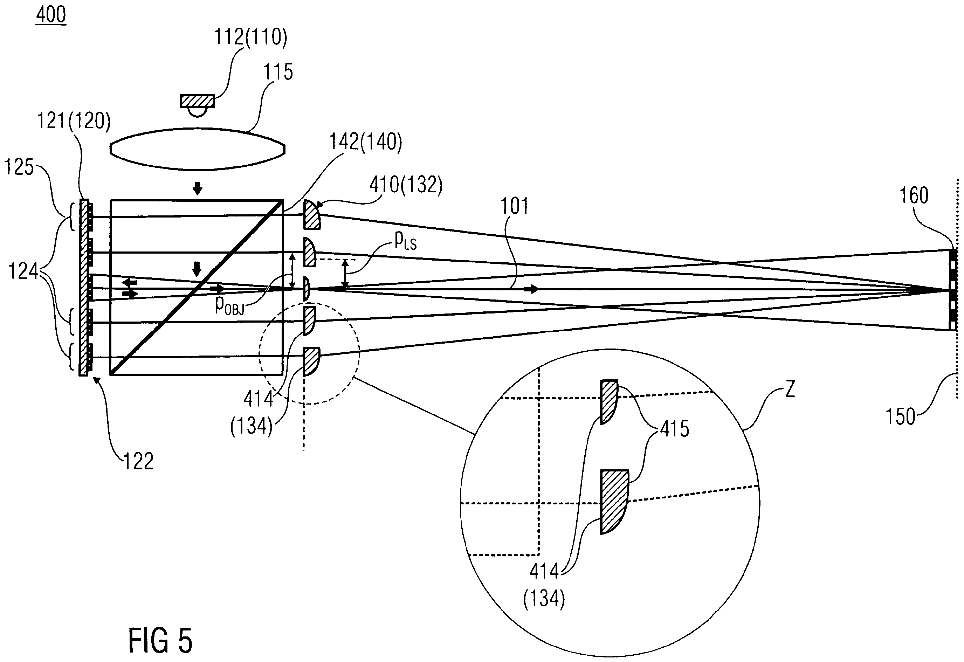

Die optische Wirkung einer nachgeschalteten Sammel- oder Zerstreuungslinse kann auch durch eine spezielle Auslegung des Projektions-Arrays erzielt werden, wie es in Fig. 5 beispielhaft gezeigt ist. Insbesondere zeigt Fig. 5 eine Seitenansicht eines erfindungsgemäßen Projektionsdisplays 400. Bei dem in Fig. 5 gezeigten Ausführungsbeispiel ist die zweidimensionale Anordnung 132 von Projektionsoptiken 134 als Projektions-Array 410 bzw. zweidimensionale Anordnung ausgebildet, wobei jede Projektionsoptik 414 des Projektions-Arrays 410 einen zur Apertur der jeweiligen Projektionsoptik dezentrierten Linsenscheitel 415 aufweist.

Die in Fig. 5 gezeigten Projektionsoptiken 414 der zweidimensionalen Anordnung 410 entsprechen im Wesentlichen den in Fig. 3 und 4 gezeigten Projektionsoptiken 134 der zweidimensionalen Anordnung 132. In einer vergrößerten Darstellung (Kreis Z) sind die einzelnen Linsenscheitel 415 der Projektionsoptiken 414 deutlicher zu erkennen. Die Dezentrierung der Linsenscheitel 415 kann beispielsweise so ausgebildet sein, dass die Projektionsoptiken 414 der zweidimensionalen Anordnung 410 zusammengenommen eine gleiche Wirkung wie die in Fig. 4 gezeigte Projektionsoptikanordnung 130 mit der nachgeschalteten Gesamtlinse 310 erzielen. Wie in Fig. 5 beispielhaft gezeigt, ist hierbei ein Mittenabstand $p_{LS}$ der Linsenscheitel 415 kleiner als der Mittenabstand $p_{OBJ}$ der zugeordneten Teilbereiche 124. Somit kann jede Linse eine Projektion des Einzelbilds des jeweiligen Teilbereichs 125 auf die Projektionsfläche 150 bewirken. Dort überlagern sich die Abbildungen der Einzelbilder zum Gesamtbild 160.

Nutzt man demnach Projektionslinsen mit einem mit dem Abstand zur zentralen optische Achse 101 bzw. Systemachse gegenüber ihrer Apertur zunehmend verschobenen Linsenscheitel, so kann die optische Funktion der Gesamtlinse, wie beispielsweise einer Sammellinse, in das Projektions- bzw. Linsenarray verlagert werden. Vorteilhaft bei dem in Fig. 5 gezeigten Ausführungsbeispiel ist die Einsparung einer optischen Komponente und zwar bei Aufrechterhaltung der geringeren Vignettierung achsenferner Kanäle.

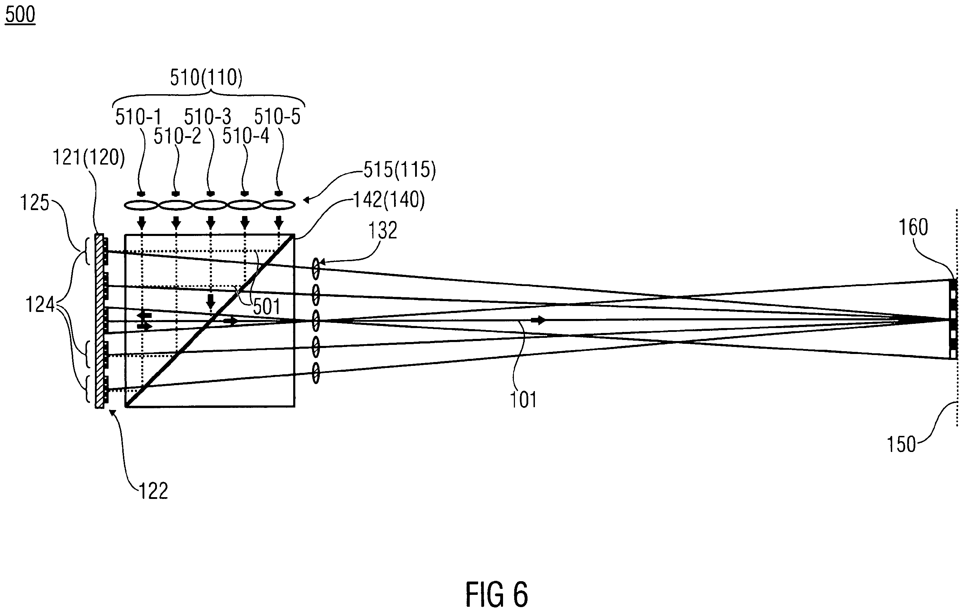

Fig. 6 zeigt die Möglichkeit des Einsatzes von Arraylichtquellen. In Fig. 6 ist ein erfindungsgemäßes Projektionsdisplay 500 mit einer Rasteranordnung 510 von Lichtquellen dargestellt. Hierbei entspricht die in Fig. 6 gezeigte Rasteranordnung 510 im Wesentlichen der Lichtquelle 110 in Fig. 3 bis 5. Ferner ist in Fig. 6 eine Kondensoroptikanordnung 515 gezeigt. Die Kondensoroptikanordnung 515 der Fig. 6 entspricht im Wesentlichen der Kondensoroptik 115 in Fig. 3 bis 5. Wie in Fig. 6 gezeigt, weist die Rasteranordnung 510 eine Mehrzahl von Lichtquellen 510-1, 510-2, ....., 510-5 auf, wobei jeder Lichtquelle eine Kondensoroptik der Kondensoroptikanordnung 515 zugeordnet ist. Insbesondere können die Rasteranordnung 510 von Lichtquellen und die Kondensoroptikanordnung 515 derart ausgebildet sein, dass Licht von den einzelnen Lichtquellen 510-1, 510-2, ......, 510-5 jeweils auf zugeordnete Teilbereiche 124 des Bildgebers 120 gelenkt werden, wie es in Fig. 6 durch Beleuchtungspfade 501 dargestellt ist. Ein Vorteil des in Fig. 6 gezeigten Ausführungsbeispiels ist, dass durch die Überlagerung vieler Einzelbilder, wie es auch bei den im Vorhergehenden beschriebenen Anordnungen der Fall ist, üblicherweise keine besonderen Maßnahmen zur Homogenisierung der Beleuchtung erforderlich sind. Ein weiterer Vorteil bei Einsatz von Arraylichtquellen, wie z. B. kollimierten LED-Arrays, ist die daraus resultierende geringere Vergrößerung der lateralen Ausdehnung der Gesamtanordnung.

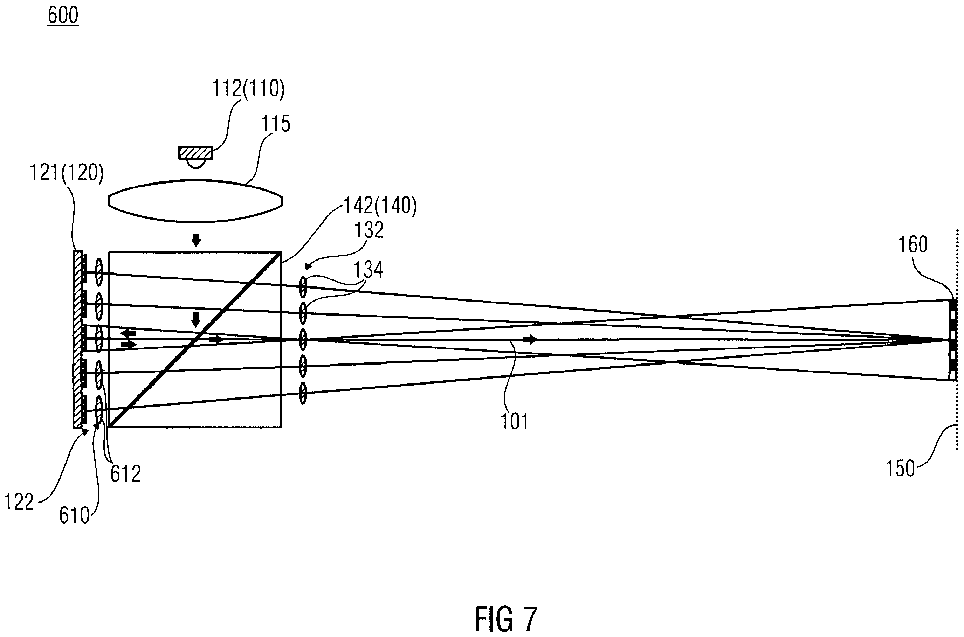

Fig. 7 zeigt eine Seitenansicht eines Projektionsdisplays 600 mit einer zweidimensionalen Anordnung 610 von Feldlinsen 612. Bei dem in Fig. 7 gezeigten Ausführungsbeispiel ist die zweidimensionale Anordnung 610 von Feldlinsen 612 zumindest in einem Strahlengang zwischen dem Bildgeber 120 und dem Strahlteiler 140 angeordnet. Hierbei ist jede Feldlinse 612 in der zweidimensionalen Anordnung 610 einer Projektionsoptik 134 in der zweidimensionalen Anordnung 132 von Projektionsoptiken 134 zugeordnet. Durch diese Verwendung der zweidimensionalen Anordnung 610 von Feldlinsen 612 kann eine Köhlersche Beleuchtung jeder Projektionsoptik 134 in der zweidimensionalen Anordnung 132 erzielt werden.

Insbesondere kann bei dem Projektionsdisplay 600 eine Brennweite $f_{FL}$ der Feldlinsen 612 zwischen dem 1,5-fachen und dem 2,5-fachen einer Brennweite $f_{PL}$ der Projektionsoptiken 134 liegen.

Anders ausgedrückt ermöglicht der in Fig. 7 dargestellte Einsatz der zweidimensionalen Anordnung von Feldlinsen bzw. eines Feldlinsenarrays zwischen Strahlteiler und Bildgeber die Köhlersche Beleuchtung der Projektionsoptik, wodurch die Bildhelligkeit bei gleichzeitig verbesserter Streulichtunterdrückung vergrößert werden kann.

Bei weiteren Ausführungsbeispielen kann die Streulichtunterdrückung noch mehr verbessert werden, indem absorbierende Blenden (nicht gezeigt in Fig. 7) in der Ebene des Feldlinsenarrays, die die Bereiche zwischen den Linsen abdecken, verwendet werden. Generell ist der Einsatz eines solchen Blendenarrays zwischen Bildgeber und polarisierendem Strahlteiler auch ohne Feldlinsenarray zur Streulichtunterdrückung sinnvoll.

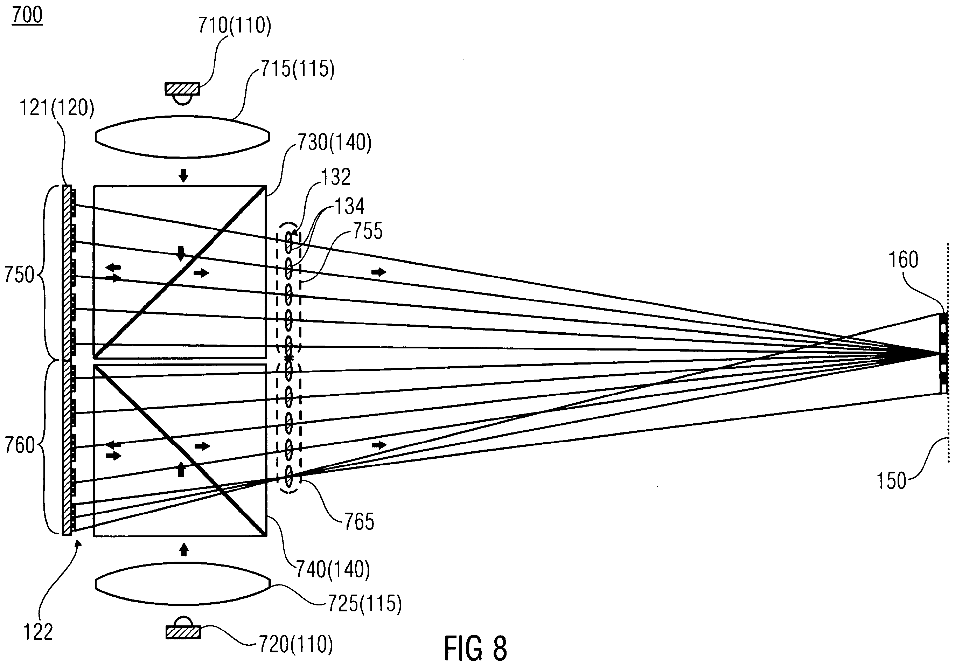

Bei weiteren Ausführungsbeispielen der vorliegenden Erfindung kann die Beleuchtung auch von mehreren Seiten durch entsprechende beispielsweise kollimierte Lichtquellen erfolgen. Fig. 8 zeigt eine Seitenansicht eines Projektionsdisplays 700 mit zwei Strahlteilern 730, 740 und gegenüberliegenden Lichtquellen 710, 720 zur zweiseitigen Beleuchtung eines reflektiven Bildgebers. In Fig. 8 weist das Projektionsdisplay 700 insbesondere eine erste und eine zweite Lichtquelle 710, 720 und einen ersten und einen zweiten Strahlteiler 730, 740, die zwischen dem Bildgeber 120 und der zweidimensionalen Anordnung 132 von Projektionsoptiken angeordnet sind, auf. Hierbei sind der erste Strahlteiler 730 im Strahlengang zwischen der ersten Lichtquelle 710 und einem Satz 750 von Teilbereichen des Bildgebers 120 und der zweite Strahlteiler 740 im Strahlengang zwischen der zweiten Lichtquelle 720 und einem zweiten Satz 760 von Teilbereichen des Bildgebers 120 angeordnet.

Wie in Fig. 8 gezeigt, wird ein erster lateraler Bereich 750 des Bildgebers 120 im Wesentlichen von der ersten Lichtquelle 710 und einer zugeordneten ersten Kondensoroptik 715 beleuchtet, während ein zweiter lateraler Bereich 760 des Bildgebers 120 im Wesentlichen von der zweiten Lichtquelle 720 und einer zugeordneten zweiten Kondensoroptik 725 beleuchtet wird. Hierbei entsprechen die erste und die zweite Lichtquelle 710, 720 und die zugeordnete erste und zweite Kondensoroptik 715 und 725 im Wesentlichen der Lichtquelle 110 bzw. der Kondensoroptik 115 der im Vorhergehenden beschriebenen Ausführungsbeispiele. Im Gegensatz zur Verwendung eines einzigen Strahlteilers erlaubt die in Fig. 8 gezeigte zweiseitige Beleuchtung mit zwei Lichtquellen 710, 720 und zwei polarisierenden Strahlteilern 730, 740 eine annähernde Halbierung der Baulänge des Projektors.

Bei weiteren Ausführungsbeispielen der Erfindung können sich die Projektionsoptiken auch dadurch voneinander unterscheiden, dass sie für das jeweilige Farbspektrum, mit dem der durch die jeweilige Projektionsoptik abgebildete Teilbereich ausgeleuchtet werden kann, gegen Verzeichnung mehr korrigiert sind als für eines der anderen Farbspektren der unterschiedlichen Farbspektren.

Bei weiteren Ausführungsbeispielen der Erfindung können in der zweidimensionalen Anordnung 132 von Projektionsoptiken die Projektionsoptiken 134 gegen eine mit anwachsender Entfernung von der optischen Achse 101 des Bildgebers 120 und der Projektionsoptikanordnung 130 wachsende Defokussierung und/oder Astigmatismus und/oder Koma korrigiert sein.

Schließlich kann bei weiteren Ausführungsbeispielen der Bildgeber 120 so ausgebildet sein, dass sich eine Größe der Teilbereiche 124 mit anwachsender Entfernung von der optischen Achse 101 des Bildgebers 120 und der Projektionsoptikanordnung 130 kontinuierlich verändert, so dass die Einzelbilder in der Projektionsfläche 150 gleichgroß sind.

Durch solch eine kontinuierliche Veränderung der Größe der Teilbereiche können mit anwachsender Entfernung von der zentralen optischen Achse 101 bzw. dem Zentralkanal wachsender Objektabstand und damit geringere Vergrößerung äußerer Projektionsoptiken 103 gegenüber dem Zentralkanal im Falle einer Dezentrierung, wie es in Fig. 1 beispielhaft gezeigt ist, bei der Projektion der Einzelbilder auf die Projektionsfläche 150 ausgeglichen werden.

Fig. 9 zeigt eine Seitenansicht eines Projektionsdisplays 800 mit zwei Strahlteilern 810, 820 und einer im Beleuchtungspfad dazwischenliegenden Halbwellenlängenplatte 830. Das Projektionsdisplay 800 aus Fig. 9 weist außer einem ersten Strahlteiler 810 insbesondere einen zweiten Strahlteiler 820, der im Strahlengang zwischen reflektivem Bildgeber 120 und der zweidimensionalen Anordnung 132 von Projektionsoptiken einerseits und dem Strahlengang zwischen der Lichtquelle 110 und dem reflektivem Bildgeber 120 andererseits angeordnet ist, und eine Halbwellenlängenplatte 830, die zwischen dem ersten Strahlteiler 810 und dem zweiten Strahlteiler 820 angeordnet ist, auf. Dadurch kann eine Polarisationsrichtung einer durch den ersten Strahlteiler 810 transmittierten Polarisationskomponente (z.B. p) eines von der Lichtquelle 110 emittierten Lichts (Polarisationskomponenten p, s) beim Passieren der Halbwellenlängenplatte 830 um 90° gedreht werden. Hierbei sind der erste Strahlteiler 810 und der zweite Strahlteiler 820 ausgebildet, um Licht aus einer Richtung der Lichtquelle 110 mit der um 90° gedrehten Polarisationsrichtung (z.B. s) in Richtung des Bildgebers 120 zu reflektieren. Ein beispielhafter Beleuchtungspfad mit den jeweiligen Polarisationskomponenten ist in Fig. 9 durch die Pfeile mit den Bezeichnungen s, p dargestellt.

In anderen Worten, nutzt man zwei polarisierende Strahlteiler, wie es in Fig. 9 beispielhaft dargestellt ist, welche über die Halbwellenlängenplatte 830 bzw. $\lambda/2$-Platte im Beleuchtungslichtpfad hintereinander geschaltet sind, so können beide Polarisationskomponenten (p, s) einer unpolarisierten Lichtquelle, wie z. B. einer LED, genutzt werden. Hierbei dreht die Halbwellenlängenplatte die ungenutzt durch den ersten Strahlteiler transmittierte Polarisationskomponente (p) um 90°, so dass sie im folgenden Strahlteiler auf die zugeordneten Hälfte des Bildgebers mit der richtigen Polarisationsrichtung (s) reflektiert wird.

Die volle Ausnutzung einer unpolarisierten Lichtquelle durch die beschriebene Anordnung mit zwei polarisierenden Strahlteilern bzw. Polarisationsteilern und einer Halbwellenplatte ($\lambda/2$-Platte) kann durch die oben beschriebene Beleuchtung von zwei Seiten ergänzt werden, was eine weitere Halbierung der Baulänge ermöglicht.

Bezugnehmend auf die vorherigen Ausführungsbeispiele kann eine Projektion von Außenkanten des ersten 730, 810 und zweiten Strahlteilers 740, 820 auf dem reflektiven Bildgeber 120 so entstehen, dass sie nicht durch die Teilbereiche 124 des Bildgebers 120 verläuft. Dadurch kann vermieden werden, dass die Außenkanten bei ihrer Projektion im Gesamtbild störend in Erscheinung treten.

Bei weiteren Ausführungsbeispielen kann die Projektion eines vollfarbigen RGB-Bildes, wie es in Fig. 10 beispielhaft dargestellt, durch eine RGB-Lichtquelle 905 realisiert werden. Dies ist z. B. durch drei LEDs 910, 920, 930 mit zugehörigen Kollimationsoptiken 915, 925, 935 und einem Farbcombiner 940 (Farbkombinierer) möglich. Hierbei entspricht die RGB-Lichtquelle 905 bei dem Ausführungsbeispiel in Fig. 10 im Wesentlichen der Lichtquelle 110 aus den vorherigen Ausführungsbeispielen. Insbesondere arbeiten bei dem in Fig. 10 gezeigten Ausführungsbeispielen die RGB-Lichtquelle 905 und der Bildgeber 950 synchronisiert farbsequentiell, um eine Vollfarbenprojektion zu erhalten.

In Fig. 10 kann der reflektive Bildgeber 950, der im Wesentlichen dem Bildgeber 120 aus den vorherigen Ausführungsbeispielen entspricht, ausgebildet sein, um identische Einzelbilder 904 von den Teilbereichen 124 des Bildgebers 950 mit einer hinreichend hohen Framerate darzustellen. Ferner kann hierbei die Lichtquelle 905 ausgebildet sein, um pro Frame sequentiell unterschiedliche Farbkomponenten (z. B. Rot, Grün, Blau) zu durchlaufen. Über die farbsequentielle Arbeitsweise des Bildgebers 950 und der einzelnen Lichtquellen 910, 920, 930 kann die Vollfarbprojektion realisiert werden, wobei der Bildinhalt des beispielsweise digitalen Bildgebers für alle Projektionskanäle identisch ist.

Bei weiteren Ausführungsbeispielen können die Lichtquelle 110, der Strahlteiler 140, die Projektionsoptikanordnung 130 und der reflektive Bildgeber 120 so ausgebildet sein, dass reflektiertes Licht von zumindest zwei Teilbereichen des Bildgebers 120 ein gleiches Farbspektrum aufweisen.

Ferner kann bei weiteren Ausführungsbeispielen die Lichtquelle 110 so angeordnet sein, dass unterschiedliche Teilbereiche des Bildgebers 120 mit unterschiedlichen Farbkomponenten angestrahlt werden. Bezugnehmend auf Fig. 8 kann beispielsweise die erste Lichtquelle 710 Licht mit einer ersten Farbkomponente emittieren, das nach Durchlaufen der Kondensoroptik 715 von dem ersten Strahlteiler 730 auf den ersten Teilbereich 750 des Bildgebers 120 reflektiert wird, während die zweite Lichtquelle 720 Licht mit einer zweiten Farbkomponente emittieren kann, das nach Durchlaufen der Kondensoroptik 725 von dem zweiten Strahlteiler 740 auf den zweiten Teilbereich 760 des Bildgebers 120 reflektiert wird. Somit können unterschiedliche Teilbereiche 750, 760 des Bildgebers 120 mit der ersten und der zweiten Farbkomponente, die voneinander verschieden sein können, angestrahlt werden.

Fig. 11 zeigt eine Seitenansicht eines Projektionsdisplays 1000 mit einer Farbfilteranordnung 1020 zum Erzeugen einer Farbmischung in der Projektinosfläche 150. In Fig. 11 ist der Bildgeber 1030, der im Wesentlichen dem Bildgeber 120 aus den vorherigen Ausführungsbeispielen entspricht, ausgebildet, um Gruppen 1032-1, 1032-2, 1032-3 von Einzelbildern, die jeweils einen Grauwert einer Farbkomponente eines Bildinhalts repräsentieren, darzustellen. Hierbei kann jeder Gruppe 1032-1, 1032-2, 1032-3 von Einzelbildern ein jeweiliges Farbfilter 1022-1, 1022-2, 1022-3 der Filteranordnung 1020 zugeordnet werden. Auf diese Weise können die Gruppen 1032-1, 1032-2, 1032-3 von Einzelbildern entsprechend der jeweiligen Farbkomponente gefiltert werden, so dass das sich in der Projektionsfläche 150 überlagernde Gesamtbild 160 eine Farbmischung darstellt.

Anders ausgedrückt stellt Fig. 11 eine andere Möglichkeit zur Erzeugung von RGB-Bildern dar. Durch Beleuchtung mit einer weißen Lichtquelle 1010 und Einfügen von RGB-Farbfiltern 1022-1, 1022-2, 1022-3 in den Abbildungslichtpfad wird in einer Anzahl von Projektionskanälen jeweils ein Grundfarbbild erzeugt. Ein Projektionskanal entspricht im Üblichen der Abbildung eines Teilbereichs des Bildgebers durch eine zugeordnete Projektionsoptik auf die Projektionsfläche. Durch Zuordnung der entsprechenden Grundfarb-Bildinhalte zu den jeweiligen Projektionskanälen gelingt somit eine RGB-Projektion. Ein Vorteil bei dieser Art der Farberzeugung ist die Möglichkeit des Weißabgleichs durch eine der spektralen Charakteristik der Lichtquelle und der Farbfilter angepassten Anzahl von Projektionskanälen für die jeweilige Grundfarbe.

Bei weiteren Ausführungsbeispielen kann jedem projizierenden Kanal bzw. einer Gruppe von Projektionsoptiken eine separate Lichtquelle einer Grundfarbe zugewiesen werden. Die Farbmischung erfolgt bei der Überlagerung zum Gesamtbild auf dem Schirm bzw. im virtuellen Bild.

Bezugnehmend auf Fig. 8 ist bei dem Projektionssystem 700 die Lichtquelle 110 beispielsweise in Form der Lichtquellen 710, 720 ausgebildet, um über die Strahlteiler 730, 740 die unterschiedlichen Gruppen 750, 760 von Teilbereichen des Bildgebers 120 mit einem unterschiedlichen Farbspektrum auszuleuchten. Hierbei unterscheiden sich innerhalb der zweidimensionalen Anordnung von Projektionsoptiken Projektionsoptiken 755, 765, die Teilbereiche 750, 760, abbilden, die durch die Lichtquellen 710, 720 mit unterschiedlichen Farbspektren (z. B. Rot, Blau) ausgeleuchtet werden, voneinander.

Ferner kann bei weiteren Ausführungsbeispielen der Bildgeber 120 so ausgebildet sein, dass sich eine Größe von Teilbereichen 750, die mit einem ersten der unterschiedlichen Farbspektren (z. B. Rot) ausleuchtbar sind, von einer Größe von Teilbereichen 760, die mit einem zweiten, zu dem ersten unterschiedlichen der unterschiedlichen Farbspektren (z. B. Blau) ausleuchtbar sind, unterscheidet. Dadurch kann eine Größe der Einzelbilder in der Projektionsfläche aufeinander abgestimmt werden.

Hierbei ist anzumerken, dass die Darstellung der Farbe außer durch die gerade genannte direkte farbige Beleuchtung der Teilbereiche auch durch die in Fig. 11 beispielhaft gezeigte Farbfilteranordnung realisiert werden kann, so dass unterschiedliche Gruppen von Teilbereichen zum Gesamtbild mit unterschiedlichen Farbspektren beitragen.

Bei weiteren Ausführungsbeispielen kann für alle Projektionsoptiken innerhalb der zweidimensionalen Anordnung von Projektionsoptiken für alle unterschiedlichen Farbkanäle, d.h. für optische Kanäle, die unterschiedlichen Farbspektren zugeordnet sind, eine gleiche Brennweite gewählt werden, so dass sich für alle unterschiedlichen Farbkanäle eine gleiche Vergrößerung ergibt. Stellt man ferner unterschiedliche geometrische Abstände der Projektionsoptiken zu dem Bildgeber ein, so können unterschiedliche optische Weglängen aufgrund einer Dispersion des Strahlteilers (z.B. des ersten oder zweiten Strahlteilers 730,740) für die unterschiedlichen Farbkanäle ausgeglichen werden.

Bei weiteren Ausführungsbeispielen kann es jedoch unerwünscht sein, die Projektionsoptiken innerhalb der zweidimensionalen Anordnung von Projektionsoptiken in unterschiedlichen Bauhöhen anzuordnen, Daher kann es vorteilhaft sein, die Projektionsoptiken in einem gleichen geometrischen Abstand zu dem Bildgeber zu halten. In diesem Fall können die unterschiedlichen optischen Weglängen aufgrund der Dispersion des Strahlteilers dadurch ausgeglichen werden, dass unterschiedliche Brennweiten der Projektionsoptiken entsprechend der unterschiedlichen optischen Weglängen für die unterschiedlichen Farbkanäle gewählt werden. Hierbei haben die unterschiedlichen Brennweiten zur Folge, dass sich in der Projektionsfläche unterschiedliche Vergrößerungen für die unterschiedlichen Farbkanäle ergeben. Die jeweilige Vergrößerung bzw. der jeweilige Abbildungsmaßstab kann jedoch durch unterschiedliche Größen der den unterschiedlichen Farbkanälen zugeordneten Teilbereiche, wie z.B. mit einer Software (d.h. rechnergesteuert) wieder angepasst werden.

Ferner kann bei weiteren Ausführungsbeispielen der Strahlteiler nicht würfelförmig, sondern als Plättchen ausgebildet sein, so dass ein Unterschied zwischen den unterschiedlichen optischen Weglängen wegen einer kleineren Dispersion vernachlässigbar ist.

Bei weiteren Ausführungsbeispielen der Erfindung kann somit durch eine farbgruppenweise Anpassung der Brennweiten der Projektionsoptiken der Grundfarbarrays eine Korrektur der Farblängsfehler der Abbildung vorgenommen werden. Ferner kann durch eine farbgruppenweise Anpassung der Teilbildgrößen der Grundfarbteilbilder eine Korrektur des Farbquerfehlers der Abbildung vorgenommen werden. Ein weiterer Vorteil der vorliegenden Erfindung ist somit die Möglichkeit einer Abberationskorrektur in Form einer kanalweisen Korrektur von Farbfehlern, wie z. B der Farblängsfehler, der Projektionsoptiken. Sollten unterschiedliche Abbildungsmaßstäbe für die Grundfarben vorliegen, ist beispielsweise auch eine Korrektur des resultierenden Farbquerfehlers im Gesamtbild durch unterschiedliche Bildgrößen der Grundfarben-Teilbilder möglich.

Bei weitern Ausführungsbeispielen kann durch eine Vorverzerrung der Teilbilder eine Korrektur der Verzeichnung vorgenommen werden. Ferner kann bei weiteren Ausführungsbeispielen mit einer kanalweise angepassten Brennweite der Projektionsoptiken eine Korrektur der Defokussierung achsenferner Projektionskanäle erfolgen.

Bei weiteren Ausführungsbeispielen kann ein Projektionsdisplay auch dadurch gekennzeichnet sein, dass eine Korrektur der aus einer Brennweitenanpassung resultierenden unterschiedlichen Abbildungsmaßstäbe zentraler bzw. achsenferner Kanäle durch eine kanalweise veränderte Größe und Vorverzerrung achsenferner Teilbilder erfolgt. Ferner kann bei weiteren Ausführungsbeispielen mit kanalweise angepassten, unterschiedlichen sagittalen und tangentialen Brennweiten achsenferner Projektionsoptiken eine Korrektur von Astigmatismus und Koma erfolgen.

Ähnlich einer Achromatisierung ermöglicht die kanalweise Korrektur monochromer Aberrationen, wie z. B. der Einfluss der Bildfeldwölbung für größere Objektabstände achsenferner Projektionskanäle oder die Verzeichnung, zusammen mit einer vom Achsenabstand der Projektionsoptik abhängigen Vorverzerrungen der Teilbilder einfache Lösungen zur Verbesserung der Bildqualität. Während bei der Farbkorrektur primär zwischen den drei Farbgruppen unterschieden wird und somit drei unterschiedliche korrigierte Projektionsoptiken resultieren, bedarf die Korrektur der monochromen Abberationen im Allgemeinen einer von der Lage des jeweiligen Projektionskanals relativ zur Arraymitte abhängigen Anpassung der jeweiligen Projektionsoptik. Hierbei bieten sich z. B. Linsenarrays mit kontinuierlich über das Array variierender Brennweite, bei elliptischen Mikrolinsen auch getrennt in sagittale und meridionale Brennweite, zur Korrektur von Astigmatismus und Koma an.

Eine weitere Möglichkeit zur Erzeugung von Farbbildern ist der Einsatz einer Arraylichtquelle, wie es z. B. in Fig. 6 in Form der Lichtquelle 510 mit der entsprechenden Kondensoroptikanordnung 515 gezeigt ist, mit beispielsweise LEDs unterschiedlicher Lichtfarbe. Die eindeutige Zuordnung der Einzellichtquellen zu Gruppen von Teilbildern und Projektionsoptiken gelingt dann vorteilhaft durch Einsatz eines Feldlinsenarrays, wie in Fig. 6 beispielhaft gezeigt ist. Der Verzicht auf Farbfilter erlaubt hierbei eine höhere Systemtransmission als bei dem im Vorhergehenden beschriebenen Lösungsvorschlag.

Bei weiteren Ausführungsbeispielen kann der reflektive Bildgeber 120 und die Projektionsoptikanordnung 130 derart ausgebildet sein, dass identische Einzelbilder aus unterschiedlichen Teilbereichen pixelgenau überlagert werden.

Ferner kann der Bildgeber 120 bzw. das Bildgeberarray ausgebildet sein, um unterschiedliche Einzelbilder anzuzeigen. Deren Abbildung durch die zugeordneten Projektionsoptiken ergibt das Gesamtbild bzw. Projektionsbild.

Fig. 12 zeigt ein Projektionsdisplay 1100, bei dem sich Abbildungen von Einzelbildern in der Projektionsfläche 150 zu einem Gesamtbild 1130 mit einer höheren Auflösung bzw. dargestellte Pixelzahl überlagern. Insbesondere kann bei dem in Fig. 12 gezeigten Ausführungsbeispiel der reflektive Bildgeber 1110 und die Projektionsoptikanordnung 1120 derart ausgebildet sein, dass sich die Abbildungen der Einzelbilder in der Projektionsfläche 150 mit einem Subpixelversatz zueinander überlagern. Hierbei weisen die Projektionsoptiken 1122 in der zweidimensionalen Anordnung 1120 eine in Fig. 12 beispielhaft dargestellte Dezentrierung bezüglich der zugeordneten Teilbereiche 124 auf. Dadurch ergibt sich, wie es in Fig.12 beispielhaft gezeigt ist, ein in der Projektionsfläche 150 überlagerndes Gesamtbild 1130, welches eine höhere Auflösung bzw. dargestellte Pixelzahl als die Einzelbilder hat.

Die Nutzung unterschiedlicher Teilbilder ermöglicht neben einer Vollfarbprojektion noch weitere Realisierungsvarianten. Insbesondere wird durch ein Aneinanderfügen von Teilbildern beispielsweise gemäß Fig. 12 eine Vergrößerung des resultierenden Gesamtbilds 1130, eine Erhöhung der Pixelzahl im resultierenden Gesamtbild oder beides gemeinsam ermöglicht. In dem in Fig. 11 beispielhaft dargestellten Fall setzt sich das Gesamtbild 1130 aus drei aneinander angefügten projizierten Teilbildern 1132-1, 1132-2, 1132-3 zusammen, die jeweils über zwei Projektionskanäle 1101 abgebildet werden.

Fig. 13 zeigt eine schematische Darstellung zur Veranschaulichung einer Überlagerung 1200 von Pixeln zu einem Gesamtbild 19. Die in Fig. 13 dargestellte Realisierung ist insbesondere für Bildgeber mit geringem Pixelfüllfaktor vorteilhaft. Ein Pixel 16a, 16b, 16c oder 16d des Bildgebers setzt sich im Allgemeinen aus einer inaktiven Fläche 17a, 17b, 17c oder 17d und einem aktiven Bereich 18a, 18b, 18c oder 18d zusammen. Für die folgende Beschreibung sei angenommen, dass Pixel 16a Weiß, 16b Hellgrau, Pixel 16c Dunkelgrau und Pixel 16d Schwarz angesteuert sind. Bildet man vier Gruppen (a, b, c, d) von Projektorkanälen, die in ihren Teilbildern an jeweils derselben Position Pixel 16a, 16b, 16c bzw. 16d enthalten, den Pixelteilbereich bzw. aktiven Bereich 18a, 18b, 18c und 18d deutlich aufgelöst projizieren und eine Dezentrierung der Projektionsoptiken aufweisen, die eine um einen halben Pixelpitch versetzte Projektion zum Gesamtbild ermöglichen (Subpixelversatz), so erhält man an der zugeordneten Pixelposition im Gesamtbild 19 ein Pixelmuster 11, welches die Überlagerung der vier Teilbilder darstellt. Die beschriebene Anordnung ermöglicht somit eine gegenüber den Teilbildern um den Faktor 4 höhere Pixelzahl im Gesamtbild.

Fig. 14 zeigt eine schematische Darstellung zur Veranschaulichung einer Überlagerung 1300 von binären schwarz-weißen Teilbildern zu einem Gesamtbild 21. Weist der Bildgeber einen hohen Füllfaktor auf, so resultiert die Überlagerung mit Subpixelversatz im Gesamtbild 21 in einer Kombination aus erhöhter Anzahl von Grauwerten und einer Erhöhung der Zahl darstellbarer Pixel. In Fig. 14 ist dieser Sachverhalt am Beispiel einer Streifenstruktur dargestellt. Die rein binären schwarz-weißen Teilbilder 20a, 20b überlagern sich zu einem Gesamtbild 21 mit einer erhöhten Anzahl von Graustufen und einer erhöhten darstellbaren Pixelzahl.

Neben der Erhöhung der Pixelzahl ist auch eine Erhöhung der Zahl der dargestellten Graustufen ohne Bildversatz möglich. Fig. 15 zeigt eine schematische Darstellung zur Veranschaulichung einer weiteren erfindungsgemäßen Überlagerung 1400 von binären schwarz-weißen Teilbildern zu einem Gesamtbild 23. In Fig. 14 sind beispielhaft rein binäre schwarz-weiße Teilbilder 22a, 22b dargestellt, deren Überlagerung zum Gesamtbild 23 bereits drei Graustufen liefert. Eine weitere Erhöhung der unterschiedlichen binären Bilder steigert die Anzahl der darstellbaren Graustufen weiter. Dieser Ansatz zur Erhöhung der Zahl der Graustufen ist auch für nicht rein binäre, sondern allgemein für Teilbilder mit wenigen Graustufen einsetzbar. Die Kombination dieses Ansatzes mit der oben beschriebenen Vorgehensweise zur Darstellung von Vollfarbbildern ermöglicht entsprechend eine Vergrößerung der Farbtiefe.

Bezugnehmend auf Fig. 14; 15 kann das Projektionsdisplay somit ausgebildet sein, um ein zu projizierendes Bild mit einer ersten Grau/Farbstufenauflösung zu empfangen, wobei der reflektive Bildgeber 120 ausgebildet ist, um die Einzelbilder (d. h. die binären schwarz-weißen Teilbilder 20a, 20b; 22a, 22b) mit einer zweiten Grau/Farbstufenauflösung darzustellen, die kleiner ist als die erste Grau/Farbstufenauflösung. Insbesondere kann hierbei das Projektionsdisplay ausgebildet sein, um abhängig von einem Grau/Farbstufenwert des zu projizierenden Bildes an einem Bildpunkt bzw. Pixel des zu projizierenden Bildes die Teilbereiche so anzusteuern, dass sich im Gesamtbild 21; 23 die Einzelbilder an einer dem Bildpunkt entsprechenden Stelle zu einer dem Grau/Farbstufenwert entsprechenden Grau/Farbstufe aufsummieren.

Nachdem nun im Vorhergehenden mögliche Details für apparative Ausgestaltungen des Projektionsdisplays von Fig. 1 gemäß einer reflektiven Variante ähnlich Fig. 2d für unterschiedliche Ausführungsbeispiele beschrieben worden sind, wird darauf hingewiesen, dass einige der Varianten, die im Hinblick auf diese Figuren 3-15 beschrieben worden sind, natürlich auch für die anderen generellen Fallgestaltungen gemäß Fig. 2a-2c anwendbar sind. Das gilt insbesondere beispielsweise im Bezug auf die unterschiedlichen Möglichkeiten der Realisierung eines farbigen Gesamtbildes 160. Zur Realisierung eines farbigen Gesamtbildes 160 kann beispielsweise der Bildgeber 120 ein digitaler Bildgeber mit Pixeln unterschiedlicher Farbkanäle sein, die beispielsweise gemäß einem Bayer-Muster angeordnet sind. Das gilt insbesondere beispielsweise für selbstleuchtende Bildgeber 120 gemäß Fig. 2c. Ebenso wäre es möglich, eine Weißlichtquelle 110 mit unterschiedlichen Farbfiltern in den Kanälen der Mehrkanaloptik 134 zu kombinieren, wobei die Filter nicht nur im Strahlengang von der Lichtquelle 110 aus betrachtet hinter dem Bildgeber 120 liegen könnten, sondern auch davor. Auch die Überlegungen hinsichtlich der Abbildungskorrekturen der einzelnen Projektionsoptiken, wie z.B. zur Berücksichtigung der jeweiligen Achsentfernung des jeweiligen Abbildungskanals von der optischen Hauptachse des Projektionsdisplays gelten auch für die Gestaltungen gemäß Fig. 2a-2c, wobei allerdings die Berücksichtigung der Dispersion durch den Strahlteiler 140 in den Ausführungsbeispielen nach Fig. 2a-2c weggelassen werden kann. Die vorhergehenden Überlegungen gelten auch in Bezug auf die grundsätzliche Möglichkeit der Hinzuschaltung einer Gesamtlinse zusätzlich zur Mehrkanaloptik. Die Mehrkanaloptik 130 kann also insbesondere eine bezüglich der zweidimensionalen Anordnung 132 von Projektionsoptiken nachgeschaltete und mit der zweidimensionalen Anordnung 132 von Projektionsoptiken 134 gemeinsam zusammenwirkende Gesamtlinse, ähnlich 310, 312, aufweisen, die ausgebildet ist, um kollimierte Strahlenbündel 315 von den Projektionsoptiken 134 in einer Brennebene der Gesamtlinse 310, 312 zu refokussieren, wobei dann die Projektionsoptiken 134 bezüglich der zugeordneten Teilbereiche 124 zentriert sind und kollimierend wirken, oder um divergente/konvergente Strahlenbündel von den Projektionsoptiken 134 in einer effektiven, sich durch Dezentrierung zwischen den Projektionsoptiken 134 einerseits und den Teilbereichen 124 andererseits und eine Fokussierung durch die nachgeschaltete Gesamtlinse ergebende Brennebene zu fokussieren.

Hinsichtlich der Feldlinse 115 wird noch darauf hingewiesen, dass selbige in Form einer - Fresnel-Linse ausgeführt sein kann, um die Bauhöhe zu reduzieren. Die erwähnte Lichtquelle und eine eventuelle Kollimationsoptik können mehrkanalig ausgeführt sein, um die Baulänge zu reduzieren, so kann einen kanalweise Beleuchtung mit R,G oder B erfolgen um eine RGB-Bild auf dem Schirm zu erzeugen.

Nach diesen Erläuterungen hinsichtlich Details des apparativen Aufbaus gemäß einigen Ausführungsbeispielen wird nun aber im Folgenden wieder speziell auf die Vorkehrungen eingegangen, die gemäß Ausführungsbeispielen unternommen werden, um Abweichungen der Projektionsfläche von einer planparallelen Ausrichtung zu der Bildgebungsebene 129 auszugleichen. Im Folgenden wird dieser Sachverhalt ein wenig detaillierter betrachtet als in der vorhergehenden Beschreibung.

Wie es aus der vorhergehenden Beschreibung hervorging, ermöglicht es das mehrkanalige Projektionsprinzip mittels der Mehrkanaloptik 130, eine erhöhte Schärfentiefe der einzelnen Kanäle zu erzielen. Für die einzelnen Kanäle ist es also grundsätzlich kein Problem, wenn die Projektionsfläche 150 einen lateral variablen Abstand zu dem Projektionsdisplay besitzt. Die Schärfeneinstellung übernimmt, wie es aus vorhergehender Beschreibung hervorging, vielmehr die Anordnung der Teilbereiche 124 des Bildgebers 120. Generell besteht eine Abhängigkeit der Projektionsentfernung von der Differenz der Mittenabstände der Projektionsoptiken der Mehrkanaloptik 130 und der korrespondierenden Teilbereiche 124 in der Bildgebungsebene 129. Wie es nun im Vorhergehenden beschrieben worden ist, wird die Schärfentiefenanpassung an die laterale Variation der Tiefe der Projektionsfläche 150 dadurch realisiert, dass die Objektstrukturen bzw. die Einzelbilder innerhalb der Teilbereiche 124 in Abhängigkeit von ihrer Position zum Zentrum der Verteilung von Teilbereichen 124, d.h. in Abhängigkeit von ihrem Abstand zum Schnittpunkt der optischen Achse des Projektionsdisplays 100 mit der Bildgebungsebene 129, durch definierte Deformationen voneinander unterscheiden. Jedem Punkt innerhalb einer Objektstruktur bzw. eines Einzelbildes wird durch seinen Abstand zum korrespondierenden Punkt in den Einzelbildern der benachbarten Projektionskanäle (Pitchabstand) eine exakt bestimmte Projektionsentfernung zugewiesen, was gemäß vorhergehenden Ausführungsbeispielen so geschieht, dass dieselbe mit der Projektionsentfernung zu demjenigen Punkt in der Projektionsfläche 150 zusammenfällt, auf den der jeweilige Punkt durch die Mehrkanaloptik 130 abgebildet wird.

Fig. 16 zeigt exemplarisch eine Projektion auf eine Ebene, welche exemplarisch um 40° zur Normalposition um die x-Achse geneigt ist. Insbesondere zeigt Fig. 16 links eine Projektion entlang der z-Achse, die hier exemplarisch die optische Achse des Projektionsdisplays darstellt, auf die Bildgebungsebene 129, zu sehen ist dort, dass hier exemplarisch regelmäßige Arrays aus Projektionsoptiken 134, die in Zeilen und Spalten angeordnet sind. Wie gesagt, ist die Anordnung nur exemplarisch. Daneben ist rechts in Fig. 16 die Anordnung aus Bildgebungsebene 129, Mehrkanaloptik 130 und Projektionsfläche 150 im Seitenschnitt gezeigt. In der Projektionsfläche 150 sind exemplarisch zwei Punkte in dem Gesamtbild hervorgehoben worden, wobei der eine mit einem Kreis 1 markiert ist, und der andere mit einem Kreuzchen 2. In den nachfolgenden Ausführungsbeispielen werden die zugeordneten Parameter dieser Punkte mit dem entsprechenden Bezugszeichen als Index markiert werden. In dem Seitenschnitt rechts in der Fig. 16 ist angezeigt, zu welchen Punkten in der Bildgebungsebene 129 die Punkte in der Projektionsebene 150 in der gezeigten Seitenschnittebene bzw. in den dieser Seitenschnittebene zugeordnete Kanäle korrespondieren. In der linken Projektionsabbildung, d.h. der Draufsicht, sind die korrespondierenden Punkte in der Bildgebungsebene 129 auch für die übrigen Kanäle dargestellt. Das Projektionsdisplay von Fig. 16 besteht hier exemplarisch aus 11 x 11 quadratisch angeordneten Projektionskanälen, aber weder die Art der Anordnung noch die Anzahl der Kanäle sind in irgendeiner Weise einschränkend zu verstehen.

Das zu projizierende Bild besteht gemäß dem Beispiel von Fig. 16 also exemplarisch aus einem Kreuz 2 und einem Kreis 1, die Bildpunkten mit unterschiedlicher Position in den Teilbereichen der Bildgebungsebene 129 entsprechen. In dem exemplarischen Fall von Fig. 16 sind es 11x11=121 korrespondierende Punkte pro Projektionspunkt 1 bzw. 2. Sie bilden zusammen jeweils eine Konstellation, die beispielsweise durch die gegenseitigen Abstände der beteiligten Punkte in der Eben 129 zueinander definiert ist.

Ausgehend von dem Neigungswinkel $\alpha$ der Projektionsfläche 150 ergeben sich aufgrund des Öffnungswinkels der Projektionsoptiken eine Minimal- bzw. eine Maximalprojektionsdistanz ($L_1$, $L_2$), welche durch

$$p_{1,2} = \frac{F \cdot p_{pL}}{L_{1,2}} + p_{pL}$$

in zwei korrespondierende Pitchabstände ($p_1$, $p_2$) dieser Objektpunkte umgerechnet werden kann. Im gezeigten Beispiel gilt aufgrund der Orientierung der Projektionsfläche 150: $L_1 < L_2$ und $p_1 > p_2$. Ausgehend vom Arrayzentrum 3 werden nun für diese beiden exemplarischen Bildpunkte jeweils Arrays mit 11 x 11 Einzelbildern erzeugt, deren Objektinhalte aufgrund der Pitchabstandsdifferenz über die 11 x 11 Kanäle variiert. Bei einem die gesamte Teilbereichsfläche ausfüllenden Bild entspricht dies einer obiger Bildungsvorschrift entsprechenden, kanalweisen definierten Deformation der Einzelbilder in den Teilbereichen 124.

Die vorerwähnten Konstellationen von Punkten in der Ebene 129 betreffend bedeutet dies also, dass sich diese räumlichen Konstellationen von Punkten in den Teilbildern, die sich jeweils durch die Mehrkanaloptik in einem jeweiligen gemeinsamen Punkt 1 bzw. 2 in dem Gesamtbild überlagern, abhängig davon in ihren Abständen zwischen den Konstellationspunkten zueinander unterscheiden, welche Entfernung der jeweilige gemeinsame Punkt 1 bzw. 2 in dem Gesamtbild von der Mehrkanaloptik 130 besitzt. Bei einer sich kontinuierlich verändernden bzw. stetigen Projektionsfläche bedeutet dies eine kontinuierliche lokale Verzerrung, d.h. Streckung und/oder Stauchung, der Einzelbilder 124 abhängig davon wo sich der korrespondierende Projektionspunkt in der Projektionsebene 150 befindet, und zwar mit einer Intensität, die mit zunehmenden Abstand von der Schnittpunkt der optischen Achse des Projektionsdisplays mit der Eben 129 zunimmt. Weist die Projektionsfläche Unstetigkeiten in der Dimension der Tiefe auf, so kann es vorkommen, dass die lokalen Verzerrungen an den den Unstetigkeitsstellen entsprechenden Orten in den Einzelbildern zu Doppeldeutigkeiten führen, welcher aber durch geeignete Maßnahmen begegnet werden könnte, wie z.B. durch Mittelwertbildung, oder dergleichen.

Auf diese Weise kann das zu projizierende Bild also unter Beibehaltung einer sehr guten Abbildungsqualität über einen vergrößerten Distanzbereich auf beliebig geformte Schirmoberflächen abgebildet werden, ohne einen aus zu großen Blendenzahlen resultierenden Helligkeitsverlust in Kauf nehmen zu müssen. Dies ermöglicht die kontrastreiche und helle Darstellung von Projektionsbildern unter

a) sehr flachen Projektionswinkeln auf ebene Schirmoberflächen

b) beliebigen Winkeln auf gewölbte Schirmoberflächen, bzw.

c) beliebigen Winkeln auf Freiform-Schirmoberflächen

Ein nicht zu unterschätzender Vorteil ist die Vermeidung von Verkippungen zwischen der Objektebene in der Projektionsoptik, wie sie ansonsten notwendig wäre, um die Scheimpflug-Bedingung zu erfüllen. Dies ermöglicht einen deutlich vereinfachten Systemaufbau.

Im Folgenden wird nun anhand von Fig. 17 die schon im Vorhergehenden erwähnte Vorverarbeitung in dem Bildgeber 120 gemäß einem Ausführungsbeispiel beschrieben, bei dem es sich bei dem Bildgeber 120 um einen digitalen Bildgeber handelt. Ausgangspunkt der Vorverarbeitung stellt das eingehende darzustellende Bild in Form von Pixelarraydaten 1200 dar. Die Pixelarraydaten 1200 stellen das darzustellende Bild beispielsweise als ein regelmäßiges Array von Pixeln 1202 bzw. Abtastwerten in Spalten und Zeilen dar. Die Abtastwerte 1202 können Farbwerte, Grauskalierungswerte, Schwarz/Weiß-Werte oder dergleichen sein. In einem ersten Verarbeitungsschritt 1204 werden nun beispielsweise die Pixeldaten 1200 herangezogen, um Ausgangseinzelbilder 1206 für die unterschiedlichen Kanäle der Mehrkanaloptik 130 zu bilden. Die Kanalaufteilung 1204 kann, wie es im Vorhergehenden Bezug nehmend auf die Figuren 13, 14 und 15 beschrieben worden ist, eine Aufteilung der Informationen in den Pixelarraydaten 1200 nach Farbkanälen vorsehen, so dass beispielsweise die Ausgangseinzelbilder 1206 jeweils nur einem Farbkanal der Pixelarraydaten 1200 entsprechen, und/oder die Kanalaufteilung 1204 umfasst eine räumliche Unterabtastung der Pixelarraydaten 1200 usw. Die Ausgangseinzelbilder 1206 stellen dann den Ausgangspunkt für die nachfolgenden Verarbeitungsschritte dar. Insbesondere werden in einem Schritt 1208 die Ausgangseinzelbilder der einzelnen Kanäle in der Bildgebungsebene angeordnet. Das heißt, die Einzelbilder 1206 werden so verzerrt und platziert in der Bildgebungsebene 129, dass durch die Mehrkanaloptik 130 die scharfe Projektion des Bildes 1200 in unverzerrter Form in der Projektionsfläche 150 entsteht. Wie es in Fig. 17 gezeigt ist, kann der Schritt 1208 gedanklich oder tatsächlich in drei Teilschritte unterteilt sein.

In einem ersten Teilschritt 1208a werden die Ausgangseinzelbilder 1206 beispielsweise zunächst in der Bildgebungsebene 129 beispielsweise nur durch translatorische Verschiebung so zueinander angeordnet platziert, dass sie zu den einzelnen Kanälen der Mehrkanaloptik 130 die im Vorhergehenden beschriebene Anordnung einnehmen, mit dem ebenfalls im Vorhergehenden bereits beschriebenen Unterschied zwischen dem Mittenabstand der Einzelbilder 1206 in der Bildgebungsebene 129 einerseits und dem Kanalabstand der Mehrkanaloptik 130 andererseits, so dass nämlich hierdurch an Anpassung an eine mittlere Projektionsentfernung L vorgenommen bzw. abhängig von letzterer die mittlere Einzelbildentfernung eingestellt wird. Nach dem Schritt 1208a würden sich die Einzelbilder 1206 beispielsweise in einer planparallelen Fläche in der mittleren Projektionsentfernung L genau bzw. scharf überlagern, wenn von optischen Ungenauigkeiten abgesehen wird, die beispielsweise durch die oben erwähnten Abbildungsfehler der Mehrkanaloptik herrühren bzw. von den unterschiedlichen Telezentrien der einzelnen Kanäle.

In einem nachfolgenden Schritt 1208b werden die Einzelbilder 1206 in den Teilbereichen 124 in der Bildgebungsebene 129 einer Vorverzerrung unterzogen, die beispielsweise für alle Einzelbilder 1206 gleich ist. Diese Verarbeitung könnte natürlich auch vor dem Schritt 1208 und sogar noch vor dem Schritt 1204 durchgeführt werden. Die Vorverzerrung 1208b korrigiert beispielsweise in dem Fall von Fig. 16 die Trapezverzerrung der Einzelbilder aufgrund der Verkippung gegenüber der planparallelen Ausrichtung. In Fig. 17 ist die Vorverzerrung der Einzelbilder 1206 in der Bildgebungsebene 129 übertrieben dargestellt. Allgemein beschäftigt sich die Vorverzerrung 1208b damit, die Verzerrungen zu korrigieren, die sich dadurch ergeben, dass der Abbildungsmaßstab, mit welchem die Einzelbilder 1206 auf die Projektionsfläche 150 durch die Mehrkanaloptik abgebildet werden, davon abhängt, in welcher Entfernung sich der jeweils betrachtete Ort in der Projektionsfläche 150 von dem Projektionsdisplay befindet, und demnach über das Gesamtbildhinweg variiert.

Nach der Vorverzerrung 1208b werden die Einzelbilder 1206 in den Teilbereichen 124 der Bildgebungsebene 129 dann kanalweise in einem Schritt 1208c individuell verzerrt. Es ist dieser Schritt, der auch die Schärfentiefenanpassung an die von der planparallelen Ausrichtung abweichende Projektionsfläche 150 vornimmt. Schaute man sich noch das Ergebnis der Projektion der Einzelbilder 1206' nach der Vorverzerrung 1208b an, so erschiene das Gesamtbild, d.h. das projizierte Bild gemäß den Daten 1200, in der Projektionsfläche 150 zwar unverzerrt, aber es wäre nur beispielsweise in der mittleren Projektionsentfernung scharf. Nach der kanalweisen Verzerrung 1208c sind die Einzelbilder 1206" kanalindividuell so verzerrt worden, dass sie die gemäß Fig. 16 erläuterten Konstellationsänderungen einander korrespondierender Punkte in den Teilbereichen 124 aufgrund der unterschiedlichen Tiefen entlang der optischen Achse des Projektionsdisplays in der Projektionsfläche 150 realisieren. In beide Schritte 1208b und 1208c fließt also als beeinflussender Parameter die Lage der Projektionsfläche 150 bzw. ihre Abweichung von der planparallelen Ausrichtung an der mittleren Projektionsdistanz, wie z.B. der Winkel $\alpha$ aus Fig. 16, ein, und zwar in der Vorverzerrung 1208b noch in für alle Kanäle gleicher Weise, und in Schritt 1208c kanalindividuell.

Die kanalindividuelle Verzerrung 1208c kann aber darüber hinaus auch noch die im Vorhergehenden ebenfalls erwähnten kanalweisen Verzerrungen umsetzen, die dazu vorgesehen sind, die übrigen Abweichungen zu korrigieren, die unter den verschiedenen Kanälen bestehen, wie z.B. die Abweichungen, die sich aus den bereits erwähnten unterschiedlichen Peripherabständen der Kanäle ergeben, d.h. den unterschiedlichen Abständen der Teilbereiche 124 von der optischen Achse des Projektionsdisplays, aus eventuellen individuellen Projektionsoptikfehlern, und eventuelle Abweichungen aufgrund der unterschiedlichen Zugehörigkeit der Teilbereiche zu unterschiedlichen Farbkanälen des Projektionsdisplays, wie z.B. Rot, Grün und Blau, und den damit verbundenen unterschiedlichen Brechungsstärken der ansonsten vielleicht identischen Projektionsoptiken der einzelnen Kanäle der Mehrkanaloptik 130.

Zum Schritt 1208a wird noch darauf hingewiesen, dass derselbe erfindungsgemäß noch den Umstand berücksichtigt und adressiert, dass durch den lokal variierenden Abbildungsmaßstab über die Projektionsfläche hinweg, die Helligkeit des Gesamtbildes eventuell sichtbar variieren könnte. Der Bildgeber ist so ausgebildet sein, dass durch sich verändernde Transmissionen von korrespondieren Bildpunkten innerhalb einer Konstellation oder durch Steuerung deren Anzahl eine Anpassung der Illuminanz innerhalb des überlagerten Bildes stattfindet. In deren Worten ausgedrückt, wird die Anzahl beitragender Bildpunkte bzw. beitragender Kanäle pro Konstellation variiert, wie z.B. so dass diese Anzahl für Projektionspunkte in näherliegenden Regionen der Projektionsfläche geringer ist als für solche in weiter weg liegenden. Bevorzugt würden dann Beiträge aus achsfernen Kanälen weggelassen werden, um somit die optischen Nachteile dieser Kanäle in ihrer Auswirkung auf das Gesamtbild zu minimieren. Es könnten aber auch nur eine Helligkeitsreduktion der Konstellationspunkte für Konstellationen angewendet werden, deren Punkte in näheren Projektionsebenenregionen liegen. Diese Helligkeitsreduktion könnte ebenfalls für achsferne Kanäle größer als für achsnahe Kanäle ausfallen. In anderen Worten ausgedrückt, ist der Bildgeber 120 ausgebildet, um zur Homogenisierung der Illuminanz über das Gesamtbild hinweg die Summe der Helligkeiten der Punkte der Konstellationen in der Bildgebungsebene 129 abhängig von der Entfernung des jeweilige gemeinsamen Punkts in dem Gesamtbild von der Mehrkanaloptik 130, zu dem die Punkte der jeweiligen Konstellationen durch die Mehrkanaloptik überlagert werden, zu variieren, und zwar durch Helligkeitsvariation der Punkte und/oder Variation der Anzahl der einen jeweiligen Punkt für die jeweilige Konstellation beitragenden Teilbilder 124. Die Helligkeitsvariation der Punkte und/oder die Variation der Anzahl der einen jeweiligen Punkt für die jeweilige Konstellation beitragenden Teilbilder 124 ist dabei so, dass Punkte aus Teilbildern 124 von achsfernerer Kanälen weniger zum Gesamtbild 160 beitragen.

Es wird darauf hingewiesen, dass der Ablauf nach Fig. 17 auch als Ablauf dafür verstanden werden könnte, wie aus einem vorgegebenen Bild eine Maske für den Bildgeber zur Erzeugung der Einzelbilder in den Teilbereichen 124 erstellt werden könnte. Das gilt auch für soeben erwähnte Berücksichtigung der Helligkeitsnivellierung. Eine kanalweise Anpassung der Objektbildpunktgröße über die einzelnen Teilbilder, insbesondere in dem Fall der Anwendung des Vorgehens nach Fig. 17 auf die Maskenerstellung, könnte in Schritt 1208c vorgenommen werden, um der durch evtl. Streckungen der Teilbilder entstehenden Überlagerung unterschiedlich ausgedehnter Bildpunkte entgegenzuwirken und somit Unschärfe zu vermeiden.

Wie es aus der vorhergehenden Beschreibung deutlich wurde, können obige Ausführungsbeispiele verwendet werden, um eine Projektion auf unterschiedlichste Projektionsflächen 150 zu realisieren. Generell kann jede Freiformfläche als Projektionsfläche 150 dienen. Die Projektionsfläche 150 könnte auch Unstetigkeitsstellen aufweisen.

Ferner wird darauf hingewiesen, dass das Projektionsdisplay beispielsweise so ausgestaltet sein kann, dass die Projektionsfläche 150 einstellbar ist, wie z.B. durch Benutzereingabe oder automatisch, und zwar so, dass die Projektionsfläche 150, auf die das Projektionsdisplay das zu projizierende Bild 1200 scharf abbildet, die tatsächliche Form eines Schirms bzw. einer Wand, auf die das Projektionsdisplay ausgerichtet ist, um das Bild darauf zu projizieren, approximiert.

Eine Einstellungsmöglichkeit betrifft beispielsweise die mittlere Entfernung L der Projektionsfläche 150 von dem Projektionsdisplay, welche mittlere Projektionsentfernung L in den Schritt 1208a einfließt. Die Entfernung könnte von dem Projektionsdisplay auch über einen entsprechenden Entfernungssensor (nicht gezeigt) erfasst werden. Ferner wäre es möglich, dass über einen iterativen Prozess die mittlere Projektionsentfernung L dadurch erfasst wird, dass ein bekanntes Testbild mit unterschiedlichen mittleren Projektionsentfernungen projiziert wird, wobei dann über eine Kamera (nicht gezeigt) des Projektionsdisplays das Ergebnis der Projektion auf dem tatsächlichen Schirm hinsichtlich Schärfe bzw. Kontrast ausgewertet wird, um als die zu verwendende Einstellung die auszuwählen, die letzteres Qualitätsmaß maximiert.

Ferner könnte eine Einstellungsmöglichkeit in der Einstellung des Neigungswinkels $\alpha$ bestehen. Der Neigungswinkel $\alpha$ könnte durch den Benutzer eingegeben werden oder automatisch ermittelt werden. Die automatische Ermittlung könnte vorsehen, dass unterschiedliche Winkeleinstellungen $\alpha$ ausprobiert und mit der vorerwähnten Kamera eingefangen und ausgewertet werden, um die Einstellung mit dem ausgewogensten Kontrast über das Gesamtbild hinweg zu verwenden. Das gleiche Vorgehen könnte für den Kippwinkel um die Achse y verwendet werden. Das iterative Projizieren des Testbildes mit unterschiedlichen Kippwinkeln könnte mit dem Variieren der mittleren Projektionsentfernung in verschränkter Weise durchgeführt werden.

Eine weitere Einstellungsmöglichkeit könnte in einer Einstellung eines Krümmungsradius der Projektionsfläche 150 bestehen, um auf diese Weise die Projektionsfläche 150 an in Richtung des Projektionsdisplays vorgewölbte oder von dem Projektionsdisplay weg gekrümmte Projektionsoberflächen anzupassen. Hier könnte ebenfalls ein gleiches Vorgehen verwendet werden, nämlich das Projizieren eines Testbilds mit unterschiedlichen Krümmungsradiuseinstellungen und Aufzeichnung eines Kamerabilds mit der vorerwähnten optionalen Kamera bei den jeweiligen Einstellungen zur Auswertung, bei welcher Krümmungsradiuseinstellung sich die beste Projektionsqualität ergibt.

Die Einstellungen könnten natürlich auch benutzergesteuert durchgeführt werden. Für die vorerwähnten Benutzereinstellungsmöglichkeiten könnte beispielsweise das Tastaturfeld einer Vorrichtung verwendet werden, in die das Projektionsdisplay verbaut ist, wie z.B. die Tastatur des Handys bzw. des Laptops oder dergleichen.

Der Bildgeber (120) könnte also ausgebildet sein, um eine oder mehrere der folgenden Benutzeinstellungsmöglichkeiten oder automatischen Einstellungsmöglichkeiten unabhängig voneinander zuzulassen:

a) Ändern der Teilbilder so, dass eine Änderung eines mittleren Projektionsabstands der Projektionsfläche von der Mehrkanaloptik mit einer entsprechenden translatorischen Verschiebung der Lage der Projektionsfläche resultiert,

b) Ändern der Teilbilder so, dass eine Änderung einer Verkippung der Projektionsfläche gegenüber der Bildgebungsebene resultiert,

c) Ändern der Teilbilder so, dass eine Änderung einer Verkippung der Projektionsfläche gegenüber der Bildgebungsebene resultiert, und zwar unter gleichzeitiger Anpassung einer Trapezverzerrungskorrektur zum Ausgleich der Verzerrung des Gesamtbildes in der Projektionsfläche aufgrund einer Verkippung derselben relativ zur Bildgebungsebene,

d) Ändern der Teilbilder so, dass eine Änderung einer Durchbiegung der Projektionsfläche gegenüber relativ zur einer planparallelen Ausrichtung zur Bildgebungsebene resultiert, und

e) Ändern der Teilbilder so, dass eine Änderung einer Durchbiegung der Projektionsfläche gegenüber der Bildgebungsebene resultiert, und zwar unter gleichzeitiger Anpassung einer Verzerrungskorrektur zum Ausgleich der Verzerrung des Gesamtbildes in der Projektionsfläche aufgrund lokalen Abbildungsvariation aufgrund der der Durchbiegung derselben relativ der planparallelen Ausrichtung zur Bildgebungsebene.

Ähnliche Vorgehen können natürlich für beliebige Projektionsflächengeometrien verwendet werden, indem beispielsweise eine entsprechende Parametrisierung verwendet wird, ähnlich denjenigen, die im Vorhergehenden diskutiert worden sind. So könnte beispielsweise ncoh der Krümmungsmittelpunkt lateral verschiebbar gestaltet werden. Als Testbild könnte beispielsweise ein Liniengitter verwendet werden. Es könnten für die verschiedenen Einstllungsparameter aber auch verschiedenen Testbilder verwendet werden.

Zusammenfassend beschreiben also die obigen Ausführungsbeispiele eine Lösung für das Problem einer Frontprojektion eines Bilds über sich stark verändernde Projektionsabstände bzw. auf geneigte, gekrümmte Flächen, Freiform-Schirmgeometrien oder dergleichen, und zwar so, dass eine kontrastreiche und scharfe Abbildung gewährleistet werden kann.

Dabei zeichnet die obigen Ausführungsbeispiele ein geringer Bauraum, eine hohe Schärfentiefe und eine hohe Helligkeit aus. Insbesondere sind bei den Ausführungsbeispielen keine geneigten Optiken erforderlich. Eine Homogenisierung der Lichtquelle, dahingehend, dass die Lichtverteilung ausgehend von der Quelle auf dem Schirm gleichmäßig bzw. im Bild in der Projektion gleichmäßig verteilt wird und somit ohne zusätzliche optische Komponente eine Vignettierung des Bilds verhindert wird, ist möglich. Die Homogenisierung kann dabei auch die Mischung der Eingangsverteilung der Lichquelle, wie z.B der Winkel und Raumvariable, der Helligkeits- und Farbwerte, bedeuten. Zudem ist mit obigen Ausführungsbeispielen auch mit einer kleinen Blendenzahl bzw. sehr offener Blende gleichzeitig eine hohe Schärfentiefe möglich. Obige Ausführungsbeispiele treffen somit also auf ein einfaches kompaktes System, das auf geneigten oder beliebig geformten Schirmgeometrien ein scharfes, helles Bild projizieren kann.

Es wird noch mal darauf hingewiesen, dass der Schritt 1208c in Fig. 17 die Einzelbilder in den Teilbereichen so verändert, dass sich dieselben ausgehend vom Arrayzentrum über das Array so ändern, dass eine kontrastreiche, scharfe Projektion in mehreren diskreten Distanzen oder einem kontinuierlichen Distanzbereich entsteht. Jedem Punkt innerhalb eines Einzelbilds eines Teilbereichs wird eine bestimmte Projektionsdistanz zugewiesen, was eine scharf fokussierte Projektion auf geneigte und optional gekrümmte Flächen ermöglicht. Dies erfolgt durch einen definierten Pitchabstand von sich auf dem Schirm überlagernden Punkten innerhalb der Verteilung von Teilbereichen. In der Konsequenz entsteht eine positionsabhängige Verzerrung der Einzelbilder bzw. Teilbereiche bzw. eine laterale Verschiebung von Teilabschnitten der Einzelbilder bzw. Teilbereiche.

Zu der vorhergehenden Möglichkeit, dass der Bildgeber auch eine feste statische Maske sein kann, wird noch darauf hingewiesen, dass letztere beispielsweise lithographisch hergestellt sein könnte. Ferner wird darauf hingewiesen, dass die optische Achse des Projektionsdisplays meistens als senkrecht auf die Bildgebungsebene 129 stehend angenommen wurde, dass dies aber nicht zwingend der Fall sein muss, Vielmehr ist es beispielsweise möglich, dass beispielsweise mehrere Projektionsdisplays gemäß beispielsweise Fig. 1 zusammen verwendet werden, um wieder zusammen ein größeres Projektionsdisplaysystem zu bilden. Die Projektionsdisplays würden ihre einzelnen Gesamtbilder beispielsweise aneinandergefügt - vielleicht ohne Überlappung - auf eine gemeinsamen, ausgedehntere Projektionsfläche projizieren, um so zusammengesetzt ein noch größeres Gesamtbild zu ergeben. In diesem Fall könnten die optischen Achsen der Projektionsdisplays beispielsweise konvergieren.

Bei obigen Ausführungsbeispielen wurden die unterschiedlichen Projektionsabstände in der Projektionsfläche 150 in die Einzelbilder kodiert. Es ist aber gemäß nachfolgend angesprochenen alternativen Ausführungsbeispielen aber auch möglich, dass diese Kodierung über die Linsen bzw. Projektionsoptiken der Mehrkanaloptik erfolgt, wie z.B. zur Realisierung von diskreten Projektionsabständen. Jeder Kanal projiziert gemäß solchen Ausführungsbeispielen vorzugsweise nicht die gesamte Bildinformation, was insgesamt weniger Transmission bzw. Luminanz bedeutet, sondern nur die, welche der korrespondierenden Entfernung zum Schirm bzw. zur Projektionsfläche 150 entspricht. Es handelt sich somit um eine Verschränkung von Array-Projektoren bzw. Kanälen, wobei jedes Teil-Array einer Entfernung zugeordnet wird. Hierbei kann auch die Fokussierung der Optiken angepasst sein, wie z.B. über eine Brennweitenanpassung der Einzelprojektionsoptiken über das Array, falls sich die Optiken in einer planparallelen Ebene bzgl. des Bildgebers befinden.

Gemäß den im vorhergehenden Absatz angesprochenen Ausführungsbeispielen ist das Projektionsdisplay von Fig. 1 abweichend von vorhergehenden Ausführungsbeispielen beispielsweise folgendermaßen ausgestaltet, wobei aber darauf hingewiesen wird, dass bis auf die Abweichungen alle Variationsmöglichkeiten, die im Vorhergehenden bezugnehmend auf die vorhergehenden Ausführungsbeispiele beschrieben worden sind, nun auch für die folgenden gelten. Das Projektionsdisplay umfasst also gemäß den nun beschriebenen alternativen Ausführungsbeispielen auch den Bildgeber 120 auf, der ausgebildet ist, um in einer Verteilung von Teilbereichen 124 einer Bildgebungsebene 129 des Bildgebers 120 Einzelbilder zu erzeugen, sowie die Mehrkanaloptik 130, die konfiguriert ist, um pro Kanal jeweils einen zugeordneten Teilbereich des Bildgebers 120 abzubilden, und zwar so, dass sich die Abbildung der Einzelbilder in einer Projektionsfläche zu einem Gesamtbild überlagert. Die Konstellationen müssen aber nicht unbedingt vorerwähnte Abhängigkeit von dem Projektionsabstand der zugerhörigen Projektionsbildpunkte in der Fläche 150 besitzen. Die Projektionsfläche 150 kann wieder eine nicht ebene Freiformfläche oder gegenüber der Bildgebungsebene verkippt sein, aber zum Ausgleich dafür und zum Erhalt der erwünschten Projektionsschärfe sind der Bildgeber 110 und die Mehrkanaloptik 130 derart ausgebildet, dass eine Ausprägung eines Beitrags jeden Kanals zu dem Gesamtbild über das Gesamtbild hinweg örtlich abhängig davon variiert, welche Entfernung der jeweilige gemeinsame Punkt in dem Gesamtbild von der Mehrkanaloptik 130 besitzt. Der Bildgeber 110 und die Mehrkanaloptik 130 können beispielsweise derart ausgebildet sein, dass eine Anzahl sich überlagernder Kanäle über das Gesamtbild hinweg örtlich abhängig davon variiert, welche Entfernung der jeweilige gemeinsame Punkt in dem Gesamtbild von der Mehrkanaloptik 130 besitzt.

Insbesondere ist es möglich, dass der Bildgeber 110 und die Mehrkanaloptik 130 disjunkte Mengen von Kanälen für unterschiedliche Projektionsflächenabstände aufweisen. Das sei anhand Fig. 18 erläutert, die zur Fig. 16 ähnlich ist, aber die Unterschiede zu den vorhergehenden Ausführungsbeispielen deutlich werden lässt. Gemäß dem alternativen Ausführungsbeispiel sind nicht alle 11x11 Kanäle, d.h. die Teilbereiche 124 mit zughöriger Projektionsoptik, für das gesamte Bild zuständig. Vielmehr ist eine erste Menge von Kanälen, hier z.B. die unteren 6x11 Kanäle, ausgebildet, um die Überlagerung zu dem Gesamtbild auf einen ersten Abschnitt des Gesamtbilds zu beschränken, der sich in einem ersten Intervall $I_2$ von Abständen zu der Mehrkanaloptik 130 befindet. Eine zweite, zu der ersten disjunkte Menge von Kanälen, hier die obere Hälfte von 5x11 Kanälen, ist ausgebildet, um die Überlagerung zu dem Gesamtbild auf einen zweiten Abschnitt des Gesamtbilds zu beschränken, der sich in einem zweiten Intervall $I_1$ von Abständen zu der Mehrkanaloptik (130) befindet, der Abstände umfasst, die größer sind als alle Abstände des ersten Intervalls $I_2$. Die Intervalle $I_1$ und $I_2$ sind hier exemplarisch überlappungsfrei, aber das muss nicht sein. In dem Fall einer unstetigen Freiformfläche mit beispielsweise nur zwei verschiedenen Abstandsbereichen, nämlich mit $L_1$ und $L_2$, müssten die Intervall einander noch nicht einmal berühren und könnten auf Einzelabstände reduziert sein. Die Einzelbilder in den Teilbereichen 124 decken hier also einzelne nicht mehr alle Abschnitte des Gesamtbilds ab. Die Einzelbilder in den oberen Teilbereichen umfassen somit unter den exemplarisch hervorgehobenen Punkten 1 und 2 somit nur noch korrespondierende Punkte für den Punkt 1, da er sich in dem Intervall $I_1$ befindet, und die Einzelbilder in den unteren Teilbereichen umfassen unter den exemplarisch hervorgehobenen Punkten 1 und 2 somit nur noch korrespondierende Punkte für den Punkt 2, da er sich in dem Intervall $I_2$ befindet

Um nun die einzelnen Kanäle auf Ihren jeweiliges Abstandsintervall scharf zu stellen, sind nun die Kanäle so konfiguriert, dass Konstellationen von Punkten in den Einzellbildern, die sich jeweils durch die erste (untere) Menge von Kanälen die Mehrkanaloptik 130 in einem jeweiligen gemeinsamen Punkt 2 in dem jeweiligen Abschnitt $I_2$ in dem Gesamtbild 160 überlagern, im wesentlichen durch eine zentrische Streckung mit einem ersten Streckungsverhältnis aus einer Konstellation von Orten hervorgeht, an der eine Projektion von Aperturzentren der Kanäle dieser ersten Menge angeordnet ist (nämlich in Fig. 18 die Zentren der unteren 6x11 Kreise), während die Konstellationen von Punkten in den Einzelbildern, die sich jeweils durch die zweite Menge von Kanälen die Mehrkanaloptik (130) in einem jeweiligen gemeinsamen Punkt 1 in dem zweiten Abschnitt $I_1$ in dem Gesamtbild 160 überlagern, im wesentlichen durch eine zentrische Streckung mit einem zweiten Streckungsverhältnis aus einer Konstellation von Orten hervorgeht, an der eine Projektion von Aperturzentren der Kanäle der zweiten Menge angeordnet ist (nämlich in Fig. 18 die Zentren der unteren 6x11 Kreise), und zwar so, dass das erste Streckungsverhältnis größer ist als das zweite Streckungsverhältnis. Das heißt, im Vergleich zu der Konstellation der Kanalprojektionsoptikzentren der unteren Kanäle ist die Konstellation der zu Punkt 2 korrespondierenden Punkte weitere ausgedehnt, als die Konstellation der zu Punkt 1 korrespondierenden Punkte ihrerseits zu der Konstellation der Kanalprojektionsoptikzentren der oberen Kanäle. Das kann auf unterschiedliche Weise geschehen: durch anpassen der Einzelbilder bzw. Teilbereiche 124 und/oder durch Vorsehen eines unterschiedlichen Pitches der Kanalprojektionsoptikzentren der oberen Kanäle im Vergleich zu dem Pitch der Kanalprojektionsoptikzentren der unteren Kanäle.

Die Mehrkanaloptik 130 könnte dabei derart ausgebildet sein, dass die Kanäle der ersten Menge auf kleinere Abstände zur Mehrkanaloptik 130 fokussiert sind als die Kanäle der zweiten Menge. Auf diese Weise ist es möglich, Tiefenschärfenbereiche abzudecken, die sogar noch die optische Tiefenschärfe der einzelnen Kanäle übertreffen.

Obige Ausführungsbeispiele könnten nun mit der Variation gemäß Fig. 18 kombiniert werden, damit jede Menge von Kanälen wiederum in ihrem jeweils zugeordneten Intervall über einen ausgedehnteren Bereich von Abständen hinweg scharf ist. In anderen Worten ausgedrückt kann eine Kombination mit dem Codieren der Projektionsentfernung über die Objekte verwendet werden, um die Bildqualität weiter zu steigern. Dies kann bespielsweise für extreme Schirmgeometrien vorteilhaft sein, falls die Schärfentiefe des einzelnen Kanals aufgrund von z.B. zu großer Brennweite oder zu kleiner Blendenzahl nicht ausreicht, um den gesamten Entfernungsbereich abzudecken, d.h. eine kanalweise Fokussierung notwendig wird. Der Bildgeber 120 kann also derart ausgebildet sein, dass sich Konstellationen von Punkten in den Einzelbildern, die sich jeweils durch die Kanäle der ersten Menge der Mehrkanaloptik 130 in einem jeweiligen gemeinsamen Punkt 1 in dem Gesamtbild 160 überlagern, oder Konstellationen von Punkten in den Einzelbildern, die sich jeweils durch die Kanäle der zweiten Menge der Mehrkanaloptik 130 in einem jeweiligen gemeinsamen Punkt 1 in dem Gesamtbild 160 überlagern, untereinander abhängig davon unterscheiden, welche Entfernung der jeweilige gemeinsame Punkt 1 bzw. 2 in dem Gesamtbild von der Mehrkanaloptik 130 besitzt.

Bei dieser Gelegenheit soll ferner darauf hingewiesen werden, dass Codieren der Projektionsentfernung über die Objekte 124 nicht notwendigerweise kontinuierlich stattfinden muss, sondern diskret realisiert sein kann. Die Veränderung der Konstellationen ist also auch in diskreten Schritten möglich, was besonders für entsprechende Projektionsmotive das System deutlich vereinfacht. Als Beispiel werde das Bild einer Tastatur als zu projizierender Inhalt betrachtet, und zwar genau genommen die Projektion einer statischen Tastatur unter sehr flachem Winkel. Hier wird für jede Buchstabenreihe, wie z.B. die F-Tastenreihe, die Reihe von ^ bis ß, die Reihe von A bis Ä, die Reihe von Y bis M, usw. bzw. für jede Taste ein Projektionsabstand berechnet, und somit nur diskrete Unterschiede der Konstellationen eingeführt. Ähnliches kann für zu projizierende Linienmuster, oder im Allgemeinen gesagt für diskretisierbare d.h. nicht geschlossen zusammenhängende Motive gelten.

Allgemein wird bezüglich obiger Beschreibung noch darauf hingewiesen, dass in der Regel die Ausdehnung des Projektors im Vergleich zur Projektionsdistanz keine Rolle spielen sollte. Das heißt, man kann die Entfernungen des Schirms allein bzgl. des Arrayzentrums berechnen. Für Extremfälle kann allerdings auch eine kanalweise Änderung der Entfernung zum Schirm auftreten, die dann wiederum kanalweise korrigiert werden kann.

Denkbare Anwendungen für obige Ausführungsbeispiele liegen im Bereich der persönlichen Kommunikations- und Unterhaltungselektronik und der Datenvisualisierung im Heim und mobilen Bereich. Ein weiteres Anwendungsgebiet liegt im Automobil- und Flugzeugbereich in Form eines "Head-up-Displays" zur projizierenden Darstellung von Farbzustandsinformationen, Navigation, Umgebungsinformationen als Fahrerassistenzsysteme bzw. zur Unterhaltung von Mitfahrern. Ebenso denkbar sind Anwendungen in der Mess- und Medizintechnik sowie bei Displayanwendungen in Industrie- und Fertigungsanlagen. Eine Verwendung obiger Projektionsdisplays als Beleuchtungseinheit, Front-Scheinwerfer, Effektbeleuchtung, wie z.B. für Automobile, ist ebenfalls denkbar.

Weitere Anwendungsmöglichkeiten bestehen in der Realisierung von Projektions- und Beleuchtungssystemen auf geneigten und optional gekrümmten Flächen für Machine Vision, Automotive, Architektur, Heimbereich- Infotainment (z.B. häuslicher Kommunikationsbereich - Küchenprojektionen), Illumination sowie ophtalmologische und allgemeinmedizinische Anwendungen (z.B. Ausleuchten der gekrümmten Netzhaut).

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Projektionsdisplay (100) mit
   einem Bildgeber (120), der ausgebildet ist, um in einer Verteilung von Teilbereichen (124) einer Bildgebungsebene (129) des Bildgebers (120) Einzelbilder zu erzeugen; und
   einer Mehrkanaloptik (130), die konfiguriert ist, um pro Kanal jeweils einen zugeordneten Teilbereich des Bildgebers (120) abzubilden, und zwar so, dass sich die Abbildung der Einzelbilder in einer Projektionsfläche zu einem Gesamtbild überlagert,
   wobei die Projektionsfläche eine nicht ebene Freiformfläche oder gegenüber der Bildgebungsebene verkippt ist, und der Bildgeber (100) derart ausgebildet ist, dass sich Konstellationen von Punkten in den Einzellbildern, die sich jeweils durch die Mehrkanaloptik (130) in einem jeweiligen gemeinsamen Punkt in dem Gesamtbild (160) überlagern, abhängig davon unterscheiden, welche Entfernung der jeweilige gemeinsame Punkt in dem Gesamtbild von der Mehrkanaloptik (130) besitzt, wobei die Mehrkanaloptik eine zweidimensionale Anordnung von Projektionsoptiken in einer zu der Bildgebungsebene im Wesentlichen parallelen Projektionsoptikebene aufweist, wobei die Projektionsoptikanordnung konfiguriert ist, um jeweils ein zugeordnetes Einzelbild des Bildgebers entlang einer jeweiligen optischen Achse in Richtung der Projektionsfläche abzubilden, und zwar so, dass sich die Abbildung der Einzelbilder in der Projektionsfläche zu dem Gesamtbild überlagern,
   wobei der Bildgeber (120) derart ausgebildet ist, um zur Homogenisierung der Illuminanz über das Gesamtbild hinweg die Summe der Helligkeiten der Punkte der Konstellationen in der Bildgebungsebene (129) abhängig von der Entfernung des jeweilige gemeinsamen Punkts in dem Gesamtbild von der Mehrkanaloptik (130), zu dem die Punkte der jeweiligen Konstellationen durch die Mehrkanaloptik überlagert werden, zu variieren, und zwar durch Helligkeitsvariation der Punkte und/oder Variation der Anzahl der einen jeweiligen Punkt für die jeweilige Konstellation beitragenden Teilbereiche (124), und
   wobei der Bildgeber (120) derart ausgebildet ist, dass die Helligkeitsvariation der Punkte und/oder die Variation der Anzahl der einen jeweiligen Punkt für die jeweilige Konstellation beitragenden Teilbereiche (124) so ist, dass Punkte aus Teilbereichen (124) von achsferneren Kanälen weniger zum Gesamtbild (160) beitragen.

2. Projektionsdisplay gemäß Anspruch 1, bei dem die Projektionsoptiken (134) eine Dezentrierung (135) bezüglich der zugeordneten Teilbereiche (124) aufweisen, bei der ein Mittenabstand ($p_{PL}$) der Projektionsoptiken (134) kleiner als ein Mittenabstand ($p_{OBJ}$) der zugeordneten Teilbereiche (124) ist.

3. Projektionssystem nach Anspruch 1, bei dem die Projektionsoptiken (134) eine Dezentrierung (137) bezüglich der zugeordneten Teilbereiche (124) aufweisen, bei der der Mittenabstand ($p_{PL}$) der Projektionsoptiken (134) größer oder gleich dem Mittenabstand ($p_{OBJ}$) der zugeordneten Teilbereiche (124) ist.

4. Projektionsdisplay nach einem der Ansprüche 1 bis 3, wobei die Projektionsoptiken (134) bezüglich der zugeordneten

EP 2 710 429 B1

Teilbereiche (124) zentriert sind und kollimierend wirken.

5. Projektionsdisplay nach Anspruch 2, 3 oder 4, bei dem die Projektionsoptikanordnung (130) ferner eine bezüglich der zweidimensionalen Anordnung (132) von Projektionsoptiken nachgeschaltete und mit der zweidimensionalen Anordnung (132) von Projektionsoptiken (134) gemeinsam zusammenwirkende Gesamtlinse (310, 312) aufweist, die ausgebildet ist, um kollimierte Strahlenbündel (315) von den Projektionsoptiken (134) in einer Brennebene der Gesamtlinse (310, 312) zu refokussieren, wobei die Projektionsoptiken (134) bezüglich der zugeordneten Teilbereiche (124) zentriert sind und kollimierend wirken, oder um divergente/konvergente Strahlenbündel von den Projektionsoptiken (134) in einer effektiven, sich durch Dezentrierung zwischen den Projektionsoptiken (134) einerseits und den Teilbereichen (124) andererseits und eine Fokussierung durch die nachgeschaltete Gesamtlinse ergebende Brennebene zu fokussieren.

6. Projektionsdisplay nach einem der Ansprüche 1 bis 5, bei dem jede Projektionsoptik (414) einen zur Apertur der jeweiligen Projektionsoptik dezentrierten Linsenscheitel (415) aufweist, wobei ein Mittenabstand der Linsenscheitel (415) größer oder kleiner als der Mittenabstand der zugeordneten Teilbereiche (124) ist, so dass die Linsen eine Projektion des Einzelbilds des jeweiligen Teilbereichs entlang divergent oder konvergent verlaufender optischer Achsen bewirken.

7. Projektionsdisplay gemäß einem der vorhergehenden Ansprüche, bei dem der Bildgeber ein transmissiver Bildgeber ist, der ausgebildet ist, die Einzelbilder durch laterale Variation der Transmissivität darzustellen, wobei das Projektionsdisplay eine Lichtquelle und eine Feldlinse bzw. ein Feldlinsenarray aufweist, und die Feldlinse in einem Abstand zu den Einzelbildern angeordnet ist, so dass eine Köhlersche Beleuchtung der Mehrkanaloptik realisiert wird.

8. Projektionsdisplay nach Anspruch 7, das ferner eine weitere Feldlinse zur Aufhebung der Beleuchtungstelezentrie aufweist.

9. Projektionsdisplay gemäß einem der vorhergehenden Ansprüche, bei dem zumindest ein Teil des Bildgebers passiv ausgeführt ist, wie z.B. in Form einer fein strukturierten Maske.

10. Projektionsdisplay nach einem der vorhergehenden Ansprüche, bei dem der Bildgeber und die Mehrkanaloptik derart ausgebildet sind, dass identische Einzelbilder aus unterschiedlichen Teilbereichen pixelgenau in der Projektionsfläche überlagert werden.

11. Projektionsdisplay nach einem der Ansprüche 1 bis 10, bei dem der Bildgeber (120) eine oder mehrere der folgenden Benutzeinstellungsmöglichkeiten unabhängig voneinander zulässt:

a) Ändern der Einzelbilder so, dass eine Änderung eines mittleren Projektionsabstands der Projektionsfläche von der Mehrkanaloptik mit einer entsprechenden translatorischen Verschiebung der Lage der Projektionsfläche resultiert,
b) Ändern der Einzelbilder so, dass eine Änderung einer Verkippung der Projektionsfläche gegenüber der Bildgebungsebene resultiert, und
c) Ändern der Einzelbilder so, dass eine Änderung einer Verkippung der Projektionsfläche gegenüber der Bildgebungsebene resultiert, und zwar unter gleichzeitiger Anpassung einer Trapezverzerrungskorrektur zum Ausgleich der Verzerrung des Gesamtbildes in der Projektionsfläche aufgrund einer Verkippung derselben relativ zur Bildgebungsebene,
d) Ändern der Einzelbilder so, dass eine Änderung einer Durchbiegung der Projektionsfläche gegenüber relativ zur einer planparallelen Ausrichtung zur Bildgebungsebene resultiert, und
e) Ändern der Einzelbilder so, dass eine Änderung einer Durchbiegung der Projektionsfläche gegenüber der Bildgebungsebene resultiert, und zwar unter gleichzeitiger Anpassung einer Verzerrungskorrektur zum Ausgleich der Verzerrung des Gesamtbildes in der Projektionsfläche aufgrund lokalen Abbildungsvariation aufgrund der der Durchbiegung derselben relativ der planparallelen Ausrichtung zur Bildgebungsebene.

12. Verfahren zum Anzeigen eines Gesamtsbilds mit Erzeugen von Einzelbilder in einer Verteilung von Teilbereichen (124) einer Bildgebungsebene (129); und
Abbilden, durch jeweils einen Kanal einer Mehrkanaloptik (130), jeweils eines zugeordneten Teilbereichs der Bildgebungsebene (129), und zwar so, dass sich die Abbildung der Einzelbilder in einer Projektionsfläche zu einem Gesamtbild überlagert,
wobei die Projektionsfläche einen nicht-eben Freiformfläche oder gegenüber der Bildgebungsebene verkippt ist, und die Erzeugung der Eizelbilder so durchgeführt wird, dass sich Konstellationen von Punkten in den Einzellbildern, die sich jeweils durch die Mehrkanaloptik (130) in einem jeweiligen gemeinsamen Punkt in dem Gesamtbild (160) überlagern, abhängig davon unterscheiden, welche Entfernung der jeweilige gemeinsame Punkt in dem Gesamtbild von der Mehrkanaloptik (130) besitzt,

wobei die Mehrkanaloptik eine zweidimensionale Anordnung von Projektionsoptiken in einer zu der Bildgebungsebene im Wesentlichen parallelen Projektionsoptikebene aufweist, wobei die Projektionsoptikanordnung konfiguriert ist, um jeweils ein zugeordnetes Einzelbild des Bildgebers entlang einer jeweiligen optischen Achse in Richtung der Projektionsfläche abzubilden, und zwar so, dass sich die Abbildung der Einzelbilder in der Projektionsfläche zu dem Gesamtbild überlagern,

wobei zur Homogenisierung der Illuminanz über das Gesamtbild hinweg die Summe der Helligkeiten der Punkte der Konstellationen in der Bildgebungsebene (129) abhängig von der Entfernung des jeweilige gemeinsamen Punkts in dem Gesamtbild von der Mehrkanaloptik (130), zu dem die Punkte der jeweiligen Konstellationen durch die Mehrkanaloptik überlagert werden, variiert wird, und zwar durch Helligkeitsvariation der Punkte und/oder Variation der Anzahl der einen jeweiligen Punkt für die jeweilige Konstellation beitragenden Teilbereiche (124), und

wobei die Helligkeitsvariation der Punkte und/oder die Variation der Anzahl der einen jeweiligen Punkt für die jeweilige Konstellation beitragenden Teilbereiche (124) so ist, dass Punkte aus Teilbereichen (124) von achsferneren Kanälen weniger zum Gesamtbild (160) beitragen.

13. Computerprogramm mit einem Programmcode zur Durchführung des Verfahrens nach Anspruch 12, wenn das Programm auf einem Computer abläuft.

**Claims**

1. A projection display (100) comprising
an imaging system (120) that is implemented to generate individual images in a distribution of sub-areas (124) of an imaging plane (129) of the imaging system (120); and
a multi-channel optics (130) that is configured to map one allocated sub-area of the imaging system (120) each per channel, such that the mapping of the individual images is superimposed to an overall image in a projection surface,
wherein the projection surface is a non-planar free-form surface or tilted with respect to the imaging plane, and the imaging system (100) is implemented such that constellations of points in the individual images, each superimposed in a respective common point in the overall image (160) by the multi-channel optics (130), differ depending on what distance the respective common point in the overall image has to the multi-channel optics (130)
wherein the multi-channel optics comprises a two-dimensional assembly of projection optics in a projection optics plane essentially parallel to the imaging plane, wherein the projection optics assembly is configured to map one allocated individual image of the imaging system each along a respective optical axis in the direction of the projection surface, such that the mappings of the individual images are superimposed to the overall image in the projection surface,
wherein the imaging system (120) is implemented, for homogenizing the illuminance across the overall image, to vary the sum of the luminosities of the points of the constellations in the imaging plane (129) depending on the distance of the respective common point in the overall image to the multi-channel optics (130) to which the points of the respective constellations are superimposed by the multi-channel optics, namely by luminosity variation of the points and/or variation of the number of sub-areas (124) contributing a respective point to the respective constellation, and
wherein the imaging system (120) is implemented such that the luminosity variation of the points and/or the variation of the number of sub-areas (124) contributing a respective point to the respective constellation is such that points of sub-areas (124) of channels remote from the axis contribute less to the overall image (160).

2. The projection display according to claim 1, wherein the projection optics (134) comprises decentration (135) with respect to the allocated sub-areas (124), wherein a center pitch ($p_{PL}$) of the projection optics (134) is smaller than a center pitch ($p_{OBJ}$) of the allocated sub-areas (124).

3. The projection system according to claim 1, wherein the projection optics (134) comprises decentration (137) with respect to the allocated sub-areas (124), wherein the center pitch ($p_{PL}$) of the projection optics (134) is larger than or equal to the center pitch ($p_{OBJ}$) of the allocated sub-areas (124).

4. The projection display according to any one of claims 1 to 3, wherein the projection optics (134) is centered with respect to the allocated sub-areas (124) and has a collimating effect.

5. The projection display according to claims 2, 3 or 4, wherein the projection optics assembly (130) further comprises an overall lens (310, 312) that is downstream with respect to the two-dimensional assembly (132) of projection optics and cooperates with the two-dimensional assembly (132) of projection optics (134) that is implemented to refocus collimated beams (315) from the projection optics (134) in a focal plane of the overall lens (310, 312), wherein the projection optics (134) are centered with respect to the allocated sub-areas (124) and have a collimating effect, or to focus divergent/convergent beams from the projection optics (134) in an effective focal plane resulting by decentration between the projection optics (134) on the one hand and the sub-areas (124) on the other hand and focusing by the downstream overall lens.

6. The projection display according to any one of claims 1 to 5, wherein each projection optics (414) comprises a lens vertex (415) decentered with respect to the aperture of the respective projection optics, wherein a center pitch of the lens vertex (415) is larger or smaller than the center pitch of the allocated sub-areas (124), so that the lenses effect a projection of the individual image of the respective sub-area along optical axes running divergently or convergently.

7. The projection display according to one of the previous claims, wherein the imaging system is a transmissive imaging system that is implemented to display the individual images by lateral variation of transmissivity, wherein the projection display comprises a light source and a field lens or field lens array, and the field lens is arranged at a distance to the individual images so that Köhler illumination of the multi-channel optics is realized.

8. The projection display according to claim 7, further comprising a further field lens for canceling the telecentric illumination.

9. The projection display according to one of the previous claims, wherein at least part of the imaging system is implemented passively, such as in the form of a finely structured mask.

10. The projection display according to one of the previous claims, wherein the imaging system and the multi-channel optics are implemented such that identical individual images from different sub-areas are superimposed in the projection surface in a pixel-precise manner.

11. The projection display according to any one of claims 1 to 10, wherein the imaging system (120) allows one or several of the following user adjustment options independent of one another:

a) changing the individual images such that a change of an average projection distance of the projection surface to the multi-channel optics with a respective translatory shift in the position of the projection surface results,
b) changing the individual images such that a change of tilting of the projection surface with respect to the imaging plane results,
c) changing the individual images such that a change of tilting of the projection surface with respect to the imaging plane results, by simultaneously adapting a trapezoidal distortion correction for compensating the distortion of the overall image in the projection surface due to tilting of the same relative to the imaging plane,
d) changing the individual images such that a change of bending of the projection surface relative to a plane-parallel orientation to the imaging plane results, and
e) changing the individual images such that a change of bending of the projection surface with respect to the imaging plane results, by simultaneously adapting a distortion correction for compensating the distortion of the overall image in the projection surface due to local mapping variations due to the bending of the same relative to the plane-parallel orientation to the imaging plane.

12. Method for displaying an overall image, comprising:

generating individual images in a distribution of sub-areas (124) of an imaging plane (129); and
mapping, by one channel of a multi-channel optics (130) each, one allocated sub-area of the imaging plane (129) each, such that the mapping of the individual images is superimposed to an overall image in a projection surface,
wherein the projection surface is a non-planar free-form surface or tilted with respect to the imaging plane, and
generation of the individual images is performed such that constellations of points in the individual images, each superimposed by the multi-channel optics (130) in a respective common point in the overall image (160), differ depending on what distance the respective common point in the overall image has to the multi-channel optics (130),

wherein the multi-channel optics comprises a two-dimensional assembly of projection optics in a projection optics plane essentially parallel to the imaging plane, wherein the projection optics assembly is configured to map one allocated individual image of the imaging system each along a respective optical axis in the direction of the projection surface, such that the mappings of the individual images are superimposed to the overall image in the projection surface,

wherein, for homogenizing the illuminance across the overall image, the sum of the luminosities of the points of the constellations in the imaging plane (129) is varied depending on the distance of the respective common point in the overall image to the multi-channel optics (130) to which the points of the respective constellations are superimposed by the multi-channel optics, namely by luminosity variation of the points and/or variation of the number of sub-areas (124) contributing a respective point to the respective constellation, and

wherein the luminosity variation of the points and/or the variation of the number of sub-areas (124) contributing a respective point to the respective constellation is such that points of sub-areas (124) of channels remote from the axis contribute less to the overall image (160).

**13.** A computer program comprising a program code for performing the method according to claim 12 when the program runs on a computer.

## Revendications

**1.** Dispositif d'affichage par projection (100), avec

un dispositif d'imagerie (120) qui est conçu pour générer, dans une distribution de zones partielles (124) d'un plan d'imagerie (129) du dispositif d'imagerie (120), des images individuelles; et

une optique multicanal (130) qui est configurée pour reproduire, par canal, chaque fois une zone partielle associée du dispositif d'imagerie (120), et ce de sorte que la reproduction des images individuelles se superpose dans une surface de projection pour former une image d'ensemble,

dans lequel la surface de projection est une surface de forme libre non plane ou est inclinée par rapport au plan d'imagerie, et le dispositif d'imagerie (100) est conçu de sorte que les constellations de points dans les images individuelles qui se superposent chaque fois par l'optique multicanal (130) en un point commun respectif dans l'image d'ensemble (160) diffèrent en fonction de la distance que présente le point commun respectif dans l'image d'ensemble par rapport à l'optique multicanal (130),

dans lequel l'optique multicanal présente un aménagement bidimensionnel d'optiques de projection dans un plan d'optiques de projection sensiblement parallèle au plan d'imagerie, dans lequel l'aménagement d'optiques de projection est configuré pour reproduire chaque fois une image individuelle associée du dispositif d'imagerie le long d'un axe optique respectif en direction de la surface de projection, et ce de sorte que la reproduction des images individuelles dans la surface de projection se chevauche pour former l'image d'ensemble,

dans lequel le dispositif d'imagerie (120) est conçu de manière à faire varier, pour homogénéiser l'éclairement dans l'image d'ensemble, la somme des luminosités des points des constellations dans le plan d'imagerie (129) en fonction de la distance du point commun respectif dans l'image d'ensemble par rapport à l'optique multicanal (130) auquel les points des constellations respectives sont superposés par l'optique multicanal, et ce en faisant varier la luminosité des points et/ou en faisant varier le nombre des zones partielles (124) contribuant par un point respectif pour la constellation respective, et

dans lequel le dispositif d'imagerie (120) est conçu de sorte que la variation de luminosité des points et/ou la variation du nombre des zones partielles (124) contribuant par un point respectif pour la constellation respective soient telles que les points des zones partielles (124) de canaux éloignés de l'axe contribuent moins à l'image d'ensemble (160).

**2.** Dispositif d'affichage par projection selon la revendication 1, dans lequel les optiques de projection (134) présentent une décentration (135) par rapport aux zones partielles associées (124), dans lequel une distance entre centres ($p_{PL}$) des optiques de projection (134) est inférieure à une distance entre centres ($p_{OBJ}$) des zones partielles associées (124).

**3.** Système de projection selon la revendication 1, dans lequel les optiques de projection (134) présentent une décentration (137) par rapport aux zones partielles associées (124), dans lequel la distance entre centres ($p_{PL}$) des optiques de projection (134) est supérieure ou égale à la distance entre centres ($p_{OBJ}$) des zones partielles associées (124).

**4.** Dispositif d'affichage par projection selon l'une des revendications 1 à 3, dans lequel les optiques de projection (134) sont centrées par rapport aux zones partielles associées (124) et ont un effet de collimation.

**5.** Dispositif d'affichage par projection selon la revendication 2, 3 ou 4, dans lequel l'aménagement d'optiques de projection (130) présente par ailleurs une lentille d'ensemble (310, 312), connectée en aval par rapport à l'aménagement bidimensionnel (132) d'optiques de projection et coopérant en commun avec l'aménagement bidimensionnel (132) d'optiques de projection (134), qui est conçue pour recentrer les faisceaux collimatés (315) des optiques de projection (134) dans un plan focal de la lentille d'ensemble (310, 312), dans lequel les optiques de projection (134) sont centrées par rapport aux zones partielles associées (124) et ont un effet de collimation, ou pour centrer les faisceaux divergents/convergents des optiques de projection (134) dans un plan focal efficace qui résulte de la décentration entre les optiques de projection (134), d'une part, et les zones partielles (124), d'autre part, et une concentration par la lentille d'ensemble connectée en aval.

**6.** Dispositif d'affichage par projection selon l'une des revendications 1 à 5, dans lequel chaque optique de projection (414) présente un sommet de lentille (415) décentré par rapport à l'ouverture de l'optique de projection respective, dans lequel une distance entre centres des sommets de lentille (415) est supérieure ou inférieure à la distance entre centres des zones partielles associées (124), de sorte que les lentilles provoquent une projection de l'image individuelle de la zone partielle respective le long d'axes optiques s'étendant de manière divergente ou convergente.

**7.** Dispositif d'affichage par projection selon l'une des revendications précédentes, dans lequel le dispositif d'imagerie est un dispositif d'imagerie transmissif qui est conçu pour représenter les images individuelles par variation latérale de la transmissivité, dans lequel le dispositif d'affichage par projection présente une source de lumière et une lentille de champ ou un réseau de lentilles de champ, et la lentille de champ est disposée à une distance des images individuelles de sorte que soit réalisé un éclairage de Kôhler de l'optique multicanal.

**8.** Dispositif d'affichage par projection selon la revendication 7, présentant par ailleurs une autre lentille de champ pour annuler la télécentrie d'éclairage.

**9.** Dispositif d'affichage par projection selon l'une des revendications précédentes, dans lequel au moins une partie du dispositif d'imagerie est réalisée passive, telle que par exemple sous forme de masque finement structuré.

**10.** Dispositif d'affichage par projection selon l'une des revendications précédentes, dans lequel le dispositif d'imagerie et l'optique multicanal sont conçus de sorte que des images individuelles identiques de zones partielles différentes soient superposées avec une précision de pixel dans la surface de projection.

**11.** Dispositif d'affichage par projection selon l'une des revendications 1 à 10, dans lequel le dispositif d'imagerie (120) permet une ou plusieurs des possibilités de réglage d'utilisation suivantes indépendamment l'une de l'autre consistant à:

a) modifier les images individuelles de sorte qu'une modification d'une distance de projection moyenne de la surface de projection par rapport à l'optique multicanal résulte en un décalage en translation correspondant de la position de la surface de projection,
b) modifier les images individuelles de sorte qu'il en résulte une modification d'une inclinaison de la surface de projection par rapport au plan d'imagerie, et
c) modifier les images individuelles de sorte qu'il en résulte une modification d'une inclinaison de la surface de projection par rapport au plan d'imagerie, et ce avec une adaptation simultanée d'une correction de distorsion trapézoïdale pour compenser la distorsion de l'image d'ensemble dans la surface de projection due à une inclinaison de cette dernière par rapport au plan d'imagerie,
d) modifier les images individuelles de sorte qu'il en résulte une modification d'une déflexion de la surface de projection par rapport à une orientation parallèle au plan par rapport au plan d'imagerie, et
e) modifier les images individuelles de sorte qu'il en résulte une modification de la déflexion de la surface de projection par rapport au plan d'imagerie, et ce avec adaptation simultanée d'une correction de distorsion pour compenser la distorsion de l'image d'ensemble dans la surface de projection due à une variation de reproduction locale due à la déflexion de cette dernière par rapport à l'orientation parallèle au plan par rapport au plan d'imagerie.

**12.** Procédé pour afficher une image d'ensemble avec le fait de
générer des images individuelles dans une distribution de zones partielles (124) d'un plan d'imagerie (129); et reproduire, par chaque fois un canal d'une optique multicanal (130), chaque fois une zone partielle associée du plan d'imagerie (129), et ce de sorte que la reproduction des images individuelles dans une zone de projection se chevauche pour former une image d'ensemble,

dans lequel la surface de projection est une surface de forme libre non plane ou est inclinée par rapport au plan d'imagerie, et la génération des images individuelles est effectuée de sorte les constellations de points dans les images individuelles qui se superposent chaque fois par l'optique multicanal (130) en un point commun respectif dans l'image d'ensemble (160) diffèrent en fonction de la distance que présente le point commun respectif dans l'image d'ensemble par rapport à l'optique multicanal (130),

dans lequel l'optique multicanal présente un aménagement bidimensionnel d'optiques de projection dans un plan d'optiques de projection sensiblement parallèle au plan d'imagerie, dans lequel l'aménagement d'optiques de projection est configuré pour reproduire chaque fois une image individuelle associée du dispositif d'imagerie le long d'un axe optique respectif en direction de la surface de projection, et ce de sorte que la reproduction des images individuelles dans la surface de projection se chevauche pour former l'image d'ensemble,

dans lequel est fait varier, pour homogénéiser l'éclairement dans l'image d'ensemble, la somme des luminosités des points des constellations dans le plan d'imagerie (129) en fonction de la distance du point commun respectif dans l'image d'ensemble par rapport à l'optique multicanal (130) auquel les points des constellations respectives sont superposés par l'optique multicanal, et ce en faisant varier la luminosité des points et/ou en faisant varier le nombre des zones partielles (124) contribuant par un point respectif pour la constellation respective, et

dans lequel la variation de luminosité des points et/ou la variation du nombre des zones partielles (124) contribuant par un point respectif pour la constellation respective sont telles que les points des zones partielles (124) de canaux éloignés de l'axe contribuent moins à l'image d'ensemble (160).

13. Programme d'ordinateur avec un code de programme pour réaliser le procédé selon la revendication 12 lorsque le programme est exécuté sur un ordinateur.

FIG 1

FIG 2A

FIG 2B

120

130

FIG 2C

120    140

130

124

124

115

110

FIG 2D

FIG 3

**FIG 4**

FIG 5

FIG 6

FIG 7

FIG 8

EP 2 710 429 B1

FIG 9

FIG 10

EP 2 710 429 B1

**FIG 11**

FIG 12

EP 2 710 429 B1

1200

18a

16a

17a

18b

16b

17b

18c

16c

17c

18d

16d

17d

19

11

FIG 13

FIG 14

EP 2 710 429 B1

1400

22a + 22b → 23

FIG 15

FIG 16

FIG 17

EP 2 710 429 B1

FIG 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009323028 A1
- US 2009237616 A1
- DE 102009024894

- WO 2006116536 A1
- WO 2011019398 A
- JP 2003177466 A